# EUROPEAN PATENT APPLICATION

(11) **EP 4 549 891 A1**
(43) Date of publication of application: **07.05.2025**
(21) Application number: 22950378.4
(22) Date of filing: 18.11.2022
(51) Int. Cl.: G01J 1/42, G01J 1/02, G01J 1/04, B60R 1/26, B60K 35/00, B60R 1/12

(54) **DISPLAY DEVICE FOR VEHICLE**

(30) Priority: 07.07.2022 KR 20220084011
(71) Applicant: LG Electronics Inc., Yeongdeungpo-gu Seoul 07336 (KR)
(72) Inventor: KIM, Sangwon, Seoul 06772 (KR); KIM, Kyunglack, Seoul 06772 (KR); KIM, Dongkuk, Seoul 06772 (KR); HONG, Selim, Seoul 06772 (KR)
(74) Representative: Vossius & Partner Patentanwälte Rechtsanwälte mbB
(86) International application number: PCT/KR2022/018343
(87) International publication number: WO 2024/010153

(57) **Abstract**

The present disclosure relates to a vehicle display device. The vehicle display device according to an embodiment of the present disclosure includes: a display panel; a viewing angle adjustment panel including a plurality of liquid crystal layers containing liquid crystals; and a controller, wherein the viewing angle adjustment panel includes: a first liquid crystal layer containing first liquid crystals, with arrangement of the first liquid crystals being changed in a first direction in which light emission toward a driver's seat is restricted; and a second liquid crystal layer containing second liquid crystals, with arrangement of the second liquid crystals being changed in a second direction in which light emission toward a passenger seat is restricted, wherein the controller is configured to control at least one of the first liquid crystal layer and the second liquid crystal layer so that a viewing angle of one area of the display panel is changed. Various other embodiments are also possible.

## Description

### [Technical Field]

This disclosure relates to a vehicle display device.

### [Background Art]

A vehicle is a means of transporting people or goods by using kinetic energy. A typical example of the vehicle is an automobile.

Systems for the convenience and safety of vehicle users have been actively developed. For example, for the convenience of users, vehicles may provide functions of adaptive cruise control (ACC), smart parking assist system (SPAS), night vision (NV), head-up display (HUD), around view monitor (AVM), adaptive headlight system (AHS), and the like. For example, for the safety of users, vehicles may provide functions of lane departure warning system (LDWS), lane keeping assist system (LKAS), autonomous emergency braking (AEB), and the like.

Meanwhile, for the convenience and safety of vehicle users, vehicles are increasingly equipped with various sensors and electronic devices. Particularly, vehicles are equipped with one or more display devices that may output information related to the driving of vehicle or content for user convenience. A display device is a device that has the function of displaying images that users may view. For example, the display device may include a liquid crystal display (LCD) using liquid crystal or an OLED display using organic light emitting diode (OLED).

A driver or passenger riding in a vehicle may watch various contents displayed on a display device. For example, a vehicle may output an instrument panel screen indicating a driving speed, mileage, and the like through a driver side display, and output an OTT screen showing content through a passenger side display.

However, various problems may occur due to content output through the display device installed in the vehicle. For example, if a driver sitting in a driver's seat looks at a passenger side display to view content displayed on the passenger side display, a traffic accident may happen because the driver momentarily fails to look ahead. Further, when content of a specific person riding in a vehicle is displayed on a display device inside a vehicle, privacy of the specific person may be exposed to others in the vehicle. In addition, when content displayed on a display device provided inside a vehicle is exposed to others outside the vehicle, privacy of a vehicle user may be violated.

### [Disclosure of invention]

### [Technical Problem]

It is an objective of the present disclosure to solve the above and other problems.

It is another objective of the present disclosure to provide a vehicle display device capable of adjusting a viewing angle of a display panel.

It is yet another objective of the present disclosure to provide a vehicle display device capable of variously adjusting a display area where a viewing angle is adjusted.

It is still another objective of the present disclosure to provide a vehicle display device capable of compensating for luminance of an image output to an area where a viewing angle is adjusted, when the viewing angle of a display panel is adjusted.

It is further another objective of the present disclosure to provide a vehicle display device capable of preventing privacy of a specific person in a vehicle from being exposed to others in the vehicle.

It is yet another objective of the present disclosure to provide a vehicle display device capable of preventing content, output to a display panel, from being exposed to the outside of a vehicle.

### [Solution to Problem]

In order to achieve the above objectives, a vehicle display device according to an embodiment of the present disclosure includes: a display panel; a viewing angle adjustment panel including a plurality of liquid crystal layers containing liquid crystals; and a controller, wherein the viewing angle adjustment panel includes: a first liquid crystal layer containing first liquid crystals, with arrangement of the first liquid crystals being changed in a first direction in which light emission toward a driver's seat is restricted; and a second liquid crystal layer containing second liquid crystals, with arrangement of the second liquid crystals being changed in a second direction in which light emission toward a passenger seat is restricted, wherein the controller is configured to control at least one of the first liquid crystal layer and the second liquid crystal layer so that a viewing angle of one area of the display panel is changed.

In addition, according to an embodiment of the present disclosure, the viewing angle adjustment panel may be composed of a plurality of subunits that are disposed side by side so that the arrangement of the liquid crystals may be controlled independently, wherein the plurality of subunits may respectively correspond to a plurality of areas forming the display panel.

In addition, according to an embodiment of the present disclosure, the controller may be configured to: change the arrangement of the first liquid crystals arranged in a first adjustment area of the viewing angle adjustment panel that corresponds to a first restricted area of the display panel to which first content is output; and change the arrangement of the second liquid crystals arranged in a second adjustment area of the viewing angle adjustment panel that corresponds to a second restricted area of the display panel to which second content is output, wherein the first content and the second content may correspond to the passenger seat and the driver's seat, respectively.

In addition, according to an embodiment of the present disclosure, the first content may include at least one of content transmitted from a first electronic device corresponding to the passenger seat, and content preset to correspond to the passenger seat; and the second content may include at least one of content transmitted from a second electronic device corresponding to the driver's seat, and content preset to correspond to the driver's seat.

In addition, according to an embodiment of the present disclosure, in response to predetermined content, related to driving of a vehicle, being output to the display panel, the controller may be configured to determine, as the first restricted area, a remaining area of the display panel excluding a predetermined area where the predetermined content is output.

In addition, according to an embodiment of the present disclosure, the controller may be configured to stop controlling the first liquid crystal layer based on a gaze of a user, sitting in the driver's seat, being directed forward.

In addition, according to an embodiment of the present disclosure, the controller may be configured to stop controlling the first liquid crystal layer based on a user not sitting in the driver's seat, and to stop controlling the second liquid crystal layer based on a user not sitting in the passenger seat.

In addition, according to an embodiment of the present disclosure, the controller may be configured to change the arrangement of the first liquid crystals arranged in a first area of the viewing angle adjustment panel that corresponds to the driver's seat based on a predetermined object located outside a vehicle and approaching the driver's seat, and to change the arrangement of the second liquid crystals arranged in a second area of the viewing angle adjustment panel that corresponds to the passenger seat based on the predetermined object approaching the passenger seat.

In addition, according to an embodiment of the present disclosure, the viewing angle adjustment panel may include: a plurality of first substrates disposed on each of both sides of the first liquid crystal layer; and a plurality of second substrates disposed on each of both sides of the second liquid crystal layer, wherein the controller may be configured to adjust a degree, by which the arrangement of the first liquid crystals is changed in the first direction, based on a first voltage difference between the plurality of first substrates and to adjust a degree, by which the arrangement of the second liquid crystals is changed in the second direction, based on a second voltage difference between the plurality of second substrates.

In addition, according to an embodiment of the present disclosure, in response to the viewing angle adjustment panel including a first area and a second area disposed closer to the driver's seat than the first area, the first voltage difference in the first area may be smaller than the first voltage difference in the second area, and the second voltage difference in the first area may be greater than the second voltage difference in the second area.

### [Advantageous Effects of Disclosure]

The vehicle display device according to the present disclosure has the following effects.

According to at least one embodiment of the present disclosure, a viewing angle of a display panel may be adjusted.

In addition, according to at least one embodiment of the present disclosure, a display area where a viewing angle is adjusted may be adjusted in various manners.

In addition, according to at least one embodiment of the present disclosure, when the viewing angle of the display panel is adjusted, it is possible to compensate for the luminance of an image output to the area where the viewing angle is adjusted.

In addition, according to at least one embodiment of the present disclosure, it is possible to prevent privacy of a specific person in a vehicle from being exposed to others in the vehicle.

In addition, according to at least one embodiment of the present disclosure, it is possible to prevent content, output to a display panel, from being exposed to the outside of a vehicle.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the spirit and scope of the present disclosure will become apparent to those skilled in the art from this detailed description.

### [Brief Description of Drawings]

FIG. 1 is a diagram illustrating the exterior of a vehicle, according to an embodiment of the present disclosure;
FIG. 2 is a diagram of a vehicle viewed from various external angles, according to an embodiment of the present disclosure;
FIGS. 3 and 4 are diagrams illustrating the interior of a vehicle, according to an embodiment of the present disclosure;
FIGS. 5 and 6 are diagrams referred to in the description of an object, according to an embodiment of the present disclosure;
FIG. 7 is a block diagram referred to in the description of a vehicle, according to an embodiment of the present disclosure;
FIGS. 8 to 29 are diagrams referred to in the description of a vehicle display device, according to an embodiment of the present disclosure;

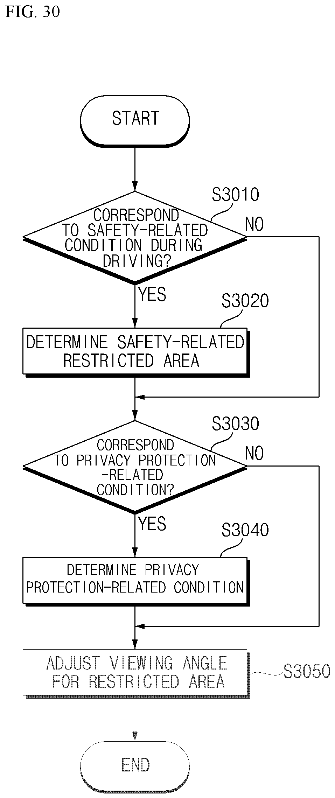

FIG. 30 is a flowchart illustrating a method of operating a vehicle display device, according to an embodiment of the present disclosure; and
FIGS. 31 to 48 are diagrams referred to in the description of operation of a vehicle display device according to an embodiment of the present disclosure.

### [Mode of Disclosure]

Hereinafter, the present disclosure will be described in detail with reference to the accompanying drawings. In order to clearly and briefly describe the present disclosure, components that are irrelevant to the description will be omitted in the drawings, and the same reference numerals are used throughout the drawings to designate the same or similar components.

The suffixes, such as "module" and "unit," for elements used in the following description are given simply in view of the ease of the description, and do not have a distinguishing meaning or role. Therefore, the "module" and "unit" may be used interchangeably.

It should be understood that the terms "comprise", 'include'', "have", etc. when used in this specification, specify the presence of stated features, integers, steps, operations, elements, components, or combinations thereof but do not preclude the presence or addition of one or more other features, integers, steps, operations, elements, components, or combinations thereof.

It will be understood that, although the terms first, second, etc., may be used herein to describe various elements, these elements should not be limited by these terms. These terms are only used to distinguish one element from another.

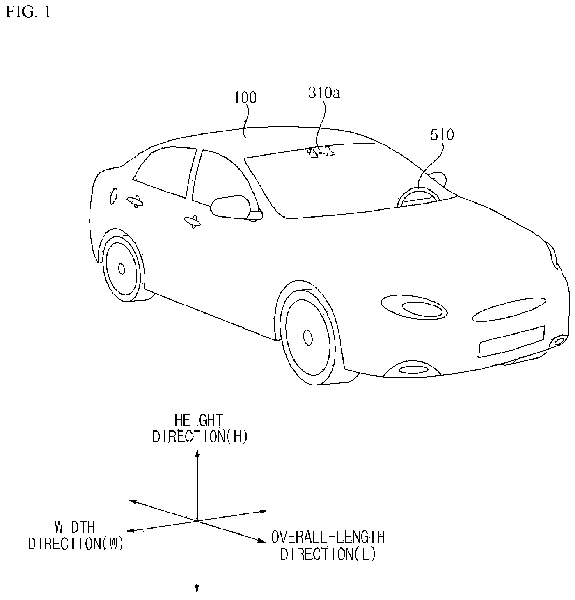

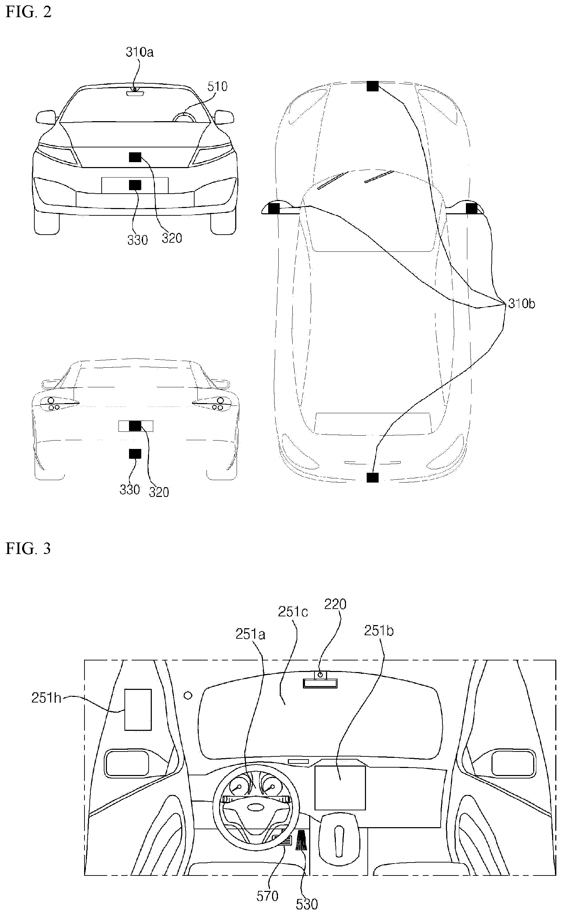

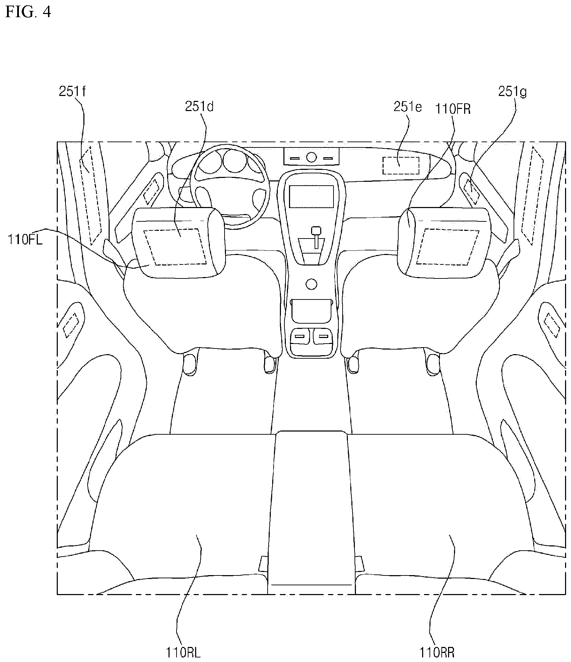

Referring to FIGS. 1 to 7, a vehicle 100 may include a plurality of wheels which are rotated by a power source, and a steering input device 510 for controlling a driving direction of the vehicle 100.

The vehicle 100 may be an autonomous vehicle.

The vehicle 100 may be switched to an autonomous mode or a manual mode in response to a user input. For example, in response to a user input received through a user interface device 200, the vehicle 100 may be switched from a manual mode to an autonomous mode, or from an autonomous mode to a manual mode.

The vehicle 100 may be switched to the autonomous mode or to the manual mode based on driving environment information. The driving environment information may include at least one of information on an object outside a vehicle, navigation information, and vehicle state information. For example, the vehicle 100 may be switched from the manual mode to the autonomous mode, or from the autonomous mode to the manual mode, based on driving environment information generated by an object detection device 300. For example, the vehicle 100 may be switched from the manual mode to the autonomous mode, or from the autonomous mode to the manual mode, based on driving environment information received through a communication device 400.

The vehicle 100 may be switched from the manual mode to the autonomous mode, or from the autonomous mode to the manual mode, based on information, data, and a signal provided from an external device.

When the vehicle 100 operates in the autonomous mode, the autonomous vehicle 100 may operate based on an operation system 700. For example, the autonomous vehicle 100 may operate based on information, data, or signals generated by a driving system 710, a parking-out system 740, and a parking system 750.

When the vehicle 100 operates in the manual mode, the autonomous vehicle 100 may receive a user input for driving of the vehicle through a maneuvering device 500. The vehicle 100 may operate in response to the user input received through the maneuvering device 500.

The overall length indicates the length from the front end to the rear end of the vehicle 100, the overall width indicates the width of the vehicle 100, and the overall height indicates the height from the bottom of the wheel to the roof. In the following description, the overall length direction L indicates the reference direction for the measurement of the overall length of the vehicle 100, the overall width direction W indicates the reference direction for the measurement of the overall width of the vehicle 100, and the overall height direction H indicates the reference direction for the measurement of the overall height of the vehicle 100.

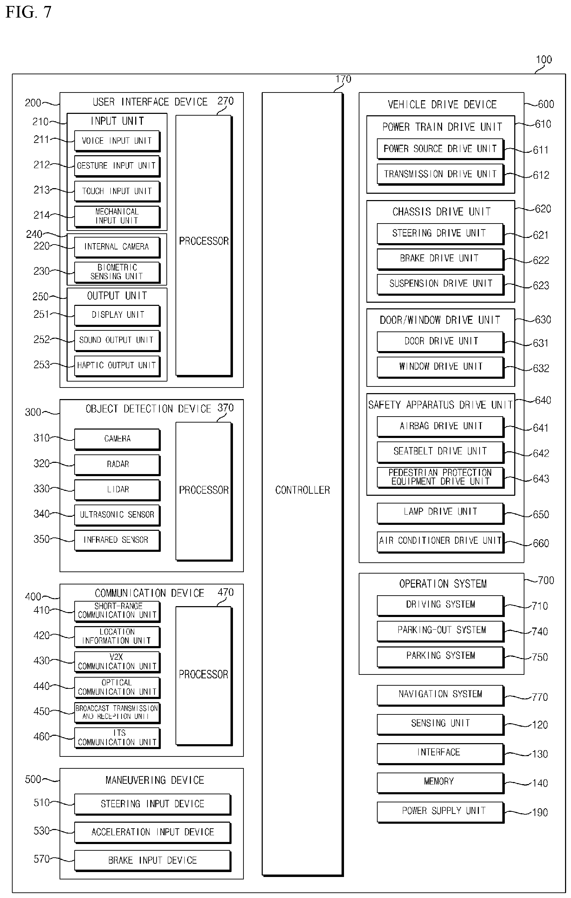

As illustrated in FIG. 7, the vehicle 100 may include the user interface device 200, the object detection device 300, the communication device 400, the maneuvering device 500, a vehicle drive device 600, the operation system 700, a navigation system 770, a sensing unit 120, an interface 130, a memory 140, a controller 170, and/or a power supply unit 190. In some implementations, the vehicle 100 may further include other components in addition to the aforementioned components, or may not include some of the aforementioned components.

The user interface device 200 is provided to support communication between the vehicle 100 and a user. The user interface device 200 may receive a user input, and provide information generated in the vehicle 100 to the user. The vehicle 100 may enable User Interfaces (UI) or User Experience (UX) through the user interface device 200.

The user interface device 200 may include an input unit 210, an internal camera 220, a biometric sensing unit 230, an output unit 250, and/or a processor 270.

In some implementations, the user interface device 200 may further include other components in addition to the aforementioned components, or may not include some of the aforementioned components.

The input unit 210 is configured to receive information from a user, and data collected in the input unit 210 may be analyzed by the processor 270 and processed into a control command of the user.

The input unit 210 may be disposed inside the vehicle. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and/or a mechanical input unit 214.

The voice input unit 211 may convert a voice input of a user into an electrical signal. The converted electrical signal may be provided to the processor 270 or the controller 170. The voice input unit 211 may include one or more microphones.

The gesture input unit 212 may convert a gesture input of a user into an electrical signal. The converted electrical signal may be provided to the processor 270 or the controller 170. The gesture input unit 212 may include at least one of an infrared sensor and an image sensor for sensing a gesture input of a user. In some implementations, the gesture input unit 212 may sense a three-dimensional (3D) gesture input of a user. To this end, the gesture input unit 212 may include a plurality of light emitting units for outputting infrared light, or a plurality of image sensors. The gesture input unit 212 may sense the 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170. The touch input unit 213 may include a touch sensor for sensing a touch input of a user. In some implementations, the touch input unit 213 may be integrally formed with a display unit 251 to implement a touch screen. The touch screen may provide an input interface and an output interface between the vehicle 100 and a user.

The mechanical input unit 214 may include at least one of a button, a dome switch, a jog wheel, and a jog switch. An electrical signal generated by the mechanical input unit 214 may be provided to the processor 270 or the controller 170. The mechanical input unit 214 may be located on a steering wheel, a center fascia, a center console, a cockpit module, a door, and the like.

The internal camera 220 may acquire images of the inside of the vehicle. The processor 270 may sense a user's condition based on the images of the inside of the vehicle. The processor 270 may acquire eye gaze information of the user from the images of the inside of the vehicle. The processor 270 may sense a gesture of the user from the images of the inside of the vehicle.

The biometric sensing unit 230 may acquire biometric information of the user. The biometric sensing unit 230 may include a sensor for acquiring biometric information of the user. The biometric sensing unit 230 may acquire finger print information, heart rate information, and the like of the user by using the sensor. The biometric information may be used for user authentication.

The output unit 250 may generate a visual, audio, or tactile output. The output unit 250 may include at least one of a display unit 251, a sound output unit 252, and a haptic output unit 253.

The display unit 251 may display graphic objects corresponding to various types of information. The display unit 251 may include at least one of a Liquid Crystal Display (LCD), a Thin Film Transistor-Liquid Crystal Display (TFT LCD), an Organic Light-Emitting Diode (OLED), a flexible display, a 3D display, and an e-ink display. The display unit 251 may be referred to as a vehicle display device 251.

The display unit 251 may form an inter-layer structure, or may be integrally formed, with the touch input unit 213 to implement a touch screen.

The display unit 251 may be implemented as a Head Up Display (HUD). When the display unit 251 is implemented as a HUD, the display unit 251 may include a projector module to output information through an image projected on a windshield or a window.

The display unit 251 may include a transparent display. The transparent display may be attached on the windshield or the window. The transparent display may display a predetermined screen with a predetermined transparency. In order to achieve the transparency, the transparent display may include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface device 200 may include a plurality of display units 251a to 251g. The display unit 251 may be disposed in a region of a steering wheel, a region 251a, 251b, 251e of an instrument panel, a region 251d of a seat, a region 251f of each pillar, a region 251b of a door, a region of a center console, a region of a head lining, a region of a sun visor, a region 251c of a windshield, or a region 251h of a window.

The sound output unit 252 converts an electric signal, provided by the processor 270 or the controller 170, into an audio signal and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR, etc., so as to allow a user to recognize the output.

The processor 270 may control the overall operation of each unit of the user interface device 200.

In some implementations, the user interface device 200 may include a plurality of processors 270 or may not include the processor 270. In the case where the processor 270 is not included in the user interface device 200, the user interface device 200 may operate under the control of the controller 170 or the processor of another device in the vehicle 100.

Meanwhile, the user interface device 200 may be referred to as a vehicle display device. The user interface device 200 may operate under the control of the controller 170.

The object detection device 300 is a device for detecting an object located outside the vehicle 100. The object detection device 300 may generate object information based on sensing data. The object information may include information about the presence of an object, location information of the object, information on distance between the vehicle 100 and the object, and the speed of the object relative to the vehicle 100. The object may be various objects related to travelling of the vehicle 100.

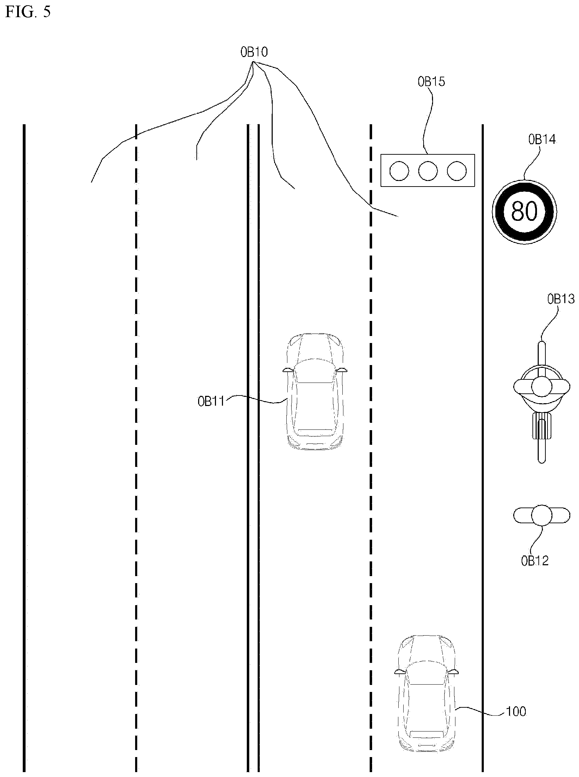

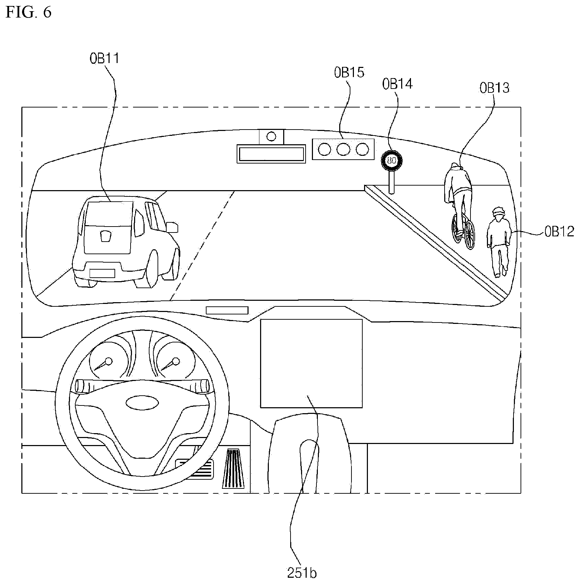

Referring to FIGS. 5 and 6, an object O may include a lane OB10, other vehicle OB11, a pedestrian OB12, a two-wheeled vehicle OB13, traffic signals OB14 and OB15, light, a road, a structure, a bump, a geographical feature, an animal, and the like.

The lane OB10 may be a driving lane, a lane next to a driving lane, or a lane in which an opposing vehicle drives. The lane OB10 may be a concept that includes left and right side lines forming a lane. The lane may be a concept that includes an intersection.

The other vehicle OB11 may be a vehicle driving in the vicinity of the vehicle 100. The other vehicle may be a vehicle within a predetermined distance from the vehicle 100. For example, the other vehicle OB11 may be a vehicle that precedes or follows the vehicle 100.

The pedestrian OB12 may be a person in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle that is located in the vicinity of the vehicle and moves with two wheels. The two-wheeled vehicle OB13 may be a vehicle having two wheels and located within a predetermined distance from the vehicle 100. For example, the two-wheeled vehicle OB13 may be a motorcycle or a bike on a sidewalk or the roadway.

The traffic signal may include a traffic light OB15, a traffic sign OB14, and a pattern or text painted on a road surface.

The light may be light emitted from a lamp provided in another vehicle. The light may be light emitted from a street lamp. The light may be solar light.

The road may include a road surface, a curve, slopes, such as an upward slope and a downward slope, and the like.

The structure may be a body located around the road and fixed onto the ground. For example, the structure may include a streetlight, a roadside tree, a building, a traffic light, a bridge, a curb, and a wall.

The geographical feature may include a mountain and a hill.

Meanwhile, the object may be divided into a moving object and a stationary object. For example, the moving object may include other moving vehicle and a moving pedestrian. For example, the stationary object may include a traffic signal, a road, a structure, other stationary vehicle, and a stationary pedestrian.

The object detection device 300 may include a camera 310, a radar 320, a lidar 330, an ultrasonic sensor 340, an infrared sensor 350, and/or a processor 370.

In some implementations, the object detection device 300 may further include other components in addition to the aforementioned components, or may not include some of the aforementioned components.

The camera 310 may be located at an appropriate position outside the vehicle in order to acquire images of the outside of the vehicle. The camera 310 may include a mono camera, a stereo camera 310a, an Around View Monitoring (AVM) camera 310b, or a 360-degree camera.

By using various image processing algorithms, the camera 310 may acquire location information of an object, information on distance to the object, and information on speed relative to the object.

For example, based on a change in size over time of an object in the acquired images, the camera 310 may acquire information on distance to the object and information on speed relative to the object.

For example, the camera 310 may acquire the information on distance to the object and the information on speed relative to the object by utilizing a pin hole model or by profiling a road surface.

For example, the camera 310 may acquire the information on distance to the object and the information on the speed relative to the object, based on information on disparity of stereo images acquired by a stereo camera 310a.

For example, the camera 310 may be disposed near a front windshield in the vehicle in order to acquire images of the front of the vehicle. Alternatively, the camera 310 may be disposed around a front bumper or a radiator grill.

For example, the camera 310 may be disposed near a rear glass in the vehicle in order to acquire images of the rear of the vehicle. Alternatively, the camera 310 may be disposed around a rear bumper, a trunk, or a tailgate.

For example, the camera 310 may be disposed near at least one of the side windows in the vehicle in order to acquire images of the side of the vehicle. Alternatively, the camera 310 may be disposed around a side mirror, a fender, or a door.

The camera 310 may provide the acquired images to the processor 370.

The radar 320 may include an electromagnetic wave transmission unit and an electromagnetic wave reception unit. The radar 320 may be implemented as a pulse radar or a continuous wave radar depending on the principle of emission of an electronic wave. In addition, the radar 320 may be implemented using a Frequency Modulated Continuous Wave (FMCW) scheme or a Frequency Shift Keying (FSK) scheme according to the waveform of a signal in the continuous wave radar scheme.

The radar 320 may detect an object through electromagnetic waves by employing a time of flight (TOF) scheme or a phase-shift scheme, and may detect a location of the detected object, a distance to the detected object, and a speed relative to the detected object.

The radar 320 may be located at an appropriate position outside the vehicle in order to sense an object located at the front, rear, and sides of the vehicle.

The lidar 330 may include a laser transmission unit and a laser reception unit. The lidar 330 may be implemented by the TOF scheme or the phase-shift scheme.

The lidar 330 may be implemented as a drive type lidar or a non-drive type lidar.

When implemented as the drive type lidar, the lidar 330 may rotate by a motor and detect an object in the vicinity of the vehicle 100.

When implemented as the non-drive type lidar, the lidar 330 utilize a light steering technique to detect an object located within a predetermined distance from the vehicle 100. The vehicle 100 may include a plurality of non-drive type lidars 330.

The lidar 330 may detect an object through laser light by using the TOF scheme or the phase-shift scheme, and may detect a location of the detected object, a distance to the detected object, and a speed relative to the detected object.

The lidar 330 may be located at an appropriate position outside the vehicle in order to sense an object located at the front, rear, and sides of the vehicle.

The ultrasonic sensor 340 may include an ultrasonic wave transmission unit and an ultrasonic wave reception unit. The ultrasonic sensor 340 may detect an object based on an ultrasonic wave, and may detect a location of the detected object, a distance to the detected object, and a speed relative to the detected object.

The ultrasonic sensor 340 may be located at an appropriate position outside the vehicle in order to sense an object located at the front, rear, and sides of the vehicle.

The infrared sensor 350 may include an infrared light transmission unit and an infrared light reception unit. The infrared sensor 340 may detect an object based on infrared light, and may detect a location of the detected object, a distance to the detected object, and a speed relative to the detected object.

The infrared sensor 350 may be located at an appropriate position outside the vehicle in order to sense an object located at the front, rear, and sides of the vehicle.

The processor 370 may control the overall operation of each unit of the object detection device 300.

The processor 37 may detect or classify objects by comparing data sensed by the camera 310, the radar 320, the lidar 330, the ultrasonic sensor 340, and the infrared sensor 350 with pre-stored data.

The processor 370 may detect and track an object based on the acquired images. The processor 370 may calculate the distance to the object, the speed relative to the object, and the like by using an image processing algorithm.

For example, the processor 370 may acquire information on the distance to the object and information on the speed relative to the object based on a change in size over time of the object in the acquired images.

For example, the processor 370 may acquire information on the distance to the object or information on the speed relative to the object by employing a pin hole model or by profiling a road surface.

For example, the processor 370 may acquire information on the distance to the object and information on the speed relative to the object based on information on disparity of stereo images acquired from the stereo camera 310a.

The processor 370 may detect and track an object based on a reflection electromagnetic wave which is formed as a result of reflection of a transmission electromagnetic wave by the object. Based on the electromagnetic wave, the processor 370 may calculate the distance to the object and the speed relative to the object.

The processor 370 may detect and track an object based on a reflection laser light which is formed as a result of reflection of transmission laser by the object. Based on the laser light, the processor 370 may calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may calculate the distance to the object and the speed relative to the object, and the like.

The processor 370 may detect and track an object based on reflection infrared light which is formed as a result of reflection of transmission infrared light by the object. Based on the infrared light, the processor 370 may calculate the distance to the object and the speed relative to the object, and the like.

In some implementations, the object detection device 300 may include a plurality of processors 370 or may not include the processor 370. For example, each of the camera 310, the radar 320, the lidar 330, the ultrasonic sensor 340, and the infrared sensor 350 may include its own processor.

In the case where the processor 370 is not included in the object detection device 300, the object detection device 300 may operate under the control of the controller 170 or the processor of a device in the vehicle 100.

The object detection device 300 may operate under the control of the controller 170.

The communication device 400 is a device for communication with an external device. Here, the external device may be another vehicle, a mobile terminal, or a server.

In order to perform communication, the communication device 400 may include at least one of a transmission antenna, a reception antenna, a Radio Frequency (RF) circuit capable of implementing various communication protocols, and an RF device.

The communication device 400 may include a short-range communication unit 410, a location information unit 420, a V2X communication unit 430, an optical communication unit 440, a broadcast transmission and reception unit 450, and/or a processor 470.

In some implementations, the communication device 400 may further include other components in addition to the aforementioned components, or may not include some of the aforementioned components.

The short-range communication unit 410 is a unit for short-range communication. The short-range communication unit 410 may support short-range communication using at least one of Bluetooth 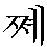 , Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless Universal Serial Bus (Wireless USB).

The short-range communication unit 410 may form wireless area networks to perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for wireless communication with a server (vehicle to infra (V2I)), another vehicle (vehicle to vehicle (V2V)), or a pedestrian (vehicle to pedestrian (V2P)). The V2X communication unit 430 may include an RF circuit capable of V2I, V2V, and V2P protocol implementations.

The optical communication unit 440 is a unit for communication with an external device through light. The optical communication unit 440 may include a light emitter, which converts an electrical signal into an optical signal and transmits the optical signal to the outside, and a light receiver which converts a received optical signal into an electrical signal.

In some implementations, the light emitter may be integrally formed with a lamp included in the vehicle 100.

The broadcast transmission and reception unit 450 is a unit for receiving a broadcast signal from an external broadcasting management server or transmitting a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The communication unit 400 may further include an Intelligent Transport Systems (ITS) communication unit 460.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system and provide the traffic information to the controller 170. For example, the ITS communication unit 460 may receive a control signal from the traffic system, and provide the control signal to the controller 170 or a processor provided in the vehicle 100.

The processor 470 may control the overall operation of each unit of the communication device 400.

In some implementations, the communication device 400 may include a plurality of processors 470, or may not include the processor 470.

In the case where the processor 470 is not included in the communication device 400, the communication device 400 may operate under the control of the controller 170 or the processor of another device in the vehicle 100.

Meanwhile, the communication device 400 may implement a vehicle display device, together with the user interface device 200. In this case, the vehicle display device may be referred to as a telematics device or an Audio Video Navigation (AVN) device.

The communication device 400 may operate under the control of the controller 170.

The maneuvering device 500 is a device for receiving a user input for driving the vehicle.

In the manual mode, the vehicle 100 may operate based on a signal provided by the maneuvering device 500.

The maneuvering device 500 may include a steering input device 510, an acceleration input device 530, and/or a brake input device 570.

The steering input device 510 may receive a user input with regard to the direction of travel of the vehicle 100. The steering input device 510 may be preferably provided in the form of a wheel to enable a steering input through the rotation thereof. In some implementations, the steering input device may be provided as a touchscreen, a touch pad, or a button.

The acceleration input device 530 may receive a user input for acceleration of the vehicle 100. The brake input device 570 may receive a user input for deceleration of the vehicle 100. The acceleration input device 530 and the brake input device 570 may be preferably provided in the form of a pedal. In some implementations, the acceleration input device or the brake input device may be provided as a touch screen, a touch pad, or a button.

The maneuvering device 500 may operate under the control of the controller 170.

The vehicle drive device 600 is a device for electrically controlling the operation of various devices in the vehicle 100.

The vehicle drive device 600 may include a power train drive unit 610, a chassis drive unit 620, a door/window drive unit 630, a safety apparatus drive unit 640, a lamp drive unit 650, and an air conditioner drive unit 660.

In some implementations, the vehicle drive device 600 may further include other components in addition to the aforementioned components, or may not include some of the aforementioned components.

Meanwhile, the vehicle drive device 600 may include a processor. Each unit of the vehicle drive device 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

For example, in the case where a fossil fuel-based engine is used as the power source, the power source drive unit 611 may perform electronic control of the engine, thereby controlling the output torque of the engine and the like. The power source drive unit 611 may adjust the output torque of the engine under the control of the controller 170.

For example, in the case where an electric motor is the power source, the power source drive unit 611 may control the motor. The power source drive unit 611 may control the RPM and toque of the motor, and the like under the control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in the case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and/or a suspension drive unit 623.

The steering drive unit 621 may perform electronic control of a steering apparatus in the vehicle 100. The steering drive unit 621 may change the direction of travel of the vehicle.

The brake drive unit 622 may perform electronic control of a brake apparatus in the vehicle 100. For example, the speed of the vehicle 100 may be reduced by controlling the operation of a brake located at a wheel.

Meanwhile, the brake drive unit 622 may individually control a plurality of brakes. The brake drive unit 622 may apply a different degree-braking force to each of the wheels.

The suspension drive unit 623 may perform electronic control of a suspension apparatus in the vehicle 100. For example, when the road surface is uneven, the suspension drive unit 623 may control the suspension apparatus to reduce the vibration of the vehicle 100.

Meanwhile, the suspension drive unit 623 may individually control a plurality of suspensions.

The door/window drive unit 630 may perform electronic control of a door apparatus or a window apparatus inside the vehicle 100.

The door/window drive unit 630 may include a door drive unit 630 and/or a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of a window apparatus. The window drive unit may control opening or closing of a plurality of windows included in the vehicle 100.

The safety apparatus drive unit 640 may perform electronic control of various safety apparatuses inside the vehicle 100.

The safety apparatus drive unit 640 may include an airbag drive unit 641, a seatbelt drive unit 642, and/or a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The seatbelt drive unit 642 may perform electronic control of a seatbelt apparatus inside the vehicle 100. For example, upon detection of a dangerous situation, the seatbelt drive unit 641 may perform the control operation so that passengers may be secured in seats 110FL, 110FR, 110RL, and 110RR with the seatbelts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses inside the vehicle 100.

The air conditioner drive unit 660 may perform electronic control of an air conditioner inside the vehicle 100. For example, when the temperature inside the vehicle is high, the air conditioner drive unit 660 may operate the air conditioner to supply cool air to the inside of the vehicle.

The vehicle drive device 600 may include a processor. Each unit of the vehicle drive device 600 may include its own processor.

The vehicle drive device 600 may operate under the control of the controller 170.

The operation system 700 is a system for controlling the overall driving operation of the vehicle 100. The operation system 700 may operate in the autonomous driving mode.

The operation system 700 may include the driving system 710, the parking-out system 740, and the parking system 750.

In some implementations, the operation system 700 may further include other components in addition to the aforementioned components, or may not include some of the aforementioned component.

Meanwhile, the operation system 700 may include a processor. Each unit of the operation system 700 may include its own processor.

Meanwhile, in some implementations, in the case where the operation system 700 is implemented as software, the operation system 700 may be a subordinate concept of the controller 170.

Meanwhile, in some implementations, the operation system 700 may be a concept including at least one of the user interface device 270, the object detection device 300, the communication device 400, the vehicle drive device 600, the navigation system 770, the sensing unit 120, and the controller 170.

The driving system 710 may perform driving of the vehicle 100.

The driving system 710 may perform driving of the vehicle 100 by providing a control signal to the vehicle drive device 600 based on navigation information received from the navigation system 770.

The driving system 710 may perform driving of the vehicle 100 by providing a control signal to the vehicle drive device 600 based on object information received from the object detection device 300.

The driving system 710 may perform driving of the vehicle 100 by providing a control signal to the vehicle drive device 600 based on a signal received from an eternal device through the communication device 400.

The driving system 710 may be a system for driving the vehicle 100, which includes at least one of the user interface device 270, the object detection device 300, the communication device 400, the maneuvering device 500, the vehicle drive device 600, the navigation system 770, the sensing unit 120, and the controller 170.

The driving system 710 may be referred to as a vehicle driving control device.

The parking-out system 740 may perform an operation of pulling the vehicle 100 out of a parking space.

The parking-out system 740 may perform an operation of pulling the vehicle 100 out of a parking space, by providing a control signal to the vehicle drive device 600 based on navigation information received from the navigation system 770.

The parking-out system 740 may perform an operation of pulling the vehicle 100 out of a parking space, by providing a control signal to the vehicle drive device 600 based on object information received from the object detection device 300.

The parking-out system 740 may perform an operation of pulling the vehicle 100 out of a parking space, by providing a control signal to the vehicle drive device 600 based on a signal received from an external device through the communication device 400.

The parking-out system 740 may be a system that performs an operation of pulling the vehicle 100 out of a parking space, and includes at least one of the user interface device 270, the object detection device 300, the communication device 400, the maneuvering device 500, the vehicle drive device 600, the navigation system 770, the sensing unit 120, and the controller 170.

The parking-out system 740 may be referred to as a vehicle parking-out control device.

The parking system 750 may perform an operation of parking the vehicle 100 in a parking space.

The parking system 750 may perform an operation of parking the vehicle 100 in a parking space, by providing a control signal to the vehicle drive device 600 based on navigation information received from the navigation system 770.

The parking system 750 may perform an operation of parking the vehicle 100 in a parking space, by providing a control signal to the vehicle drive device 600 based on object information received from the object detection device 300.

The parking system 750 may perform an operation of parking the vehicle 100 in a parking space, by providing a control signal to the vehicle drive device 600 based on a signal received from an external device through the communication device 400.

The parking system 750 may be a system that performs an operation of parking the vehicle 100 in a parking space, and includes at least one of the user interface device 270, the object detection device 300, the communication device 400, the maneuvering device 500, the vehicle drive device 600, the navigation system 770, the sensing unit 120, and the controller 170.

The parking system 750 may be referred to as a vehicle parking control device.

The navigation system 770 may provide navigation information. The navigation information may include at least one of map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some implementations, the navigation system 770 may update pre-stored information by receiving information from an external device through the communication device 400.

In some implementations, the navigation system 770 may be classified as a sub-component of the user interface device 200.

The sensing unit 120 may sense the state of the vehicle. The sensing unit 120 may include an Inertial Navigation Unit (IMU) sensor, a collision sensor, a wheel sensor, a speed sensor, a gradient sensor, a weight sensor, a heading sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, a brake pedal position sensor, and the like.

Meanwhile, the IMU sensor may include one or more of an acceleration sensor, a gyro sensor, and a magnetic sensor.

The sensing unit 120 may acquire sensing signals with regard to, for example, vehicle position information, vehicle motion information, vehicle yaw information, vehicle roll information, vehicle pitch information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about the pressure applied to an accelerator pedal, and information about the pressure applied to a brake pedal.

The sensing unit 120 may further include an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS), and the like.

The sensing unit 120 may generate vehicle state information based on sensing data. The vehicle state information may be information that is generated based on data sensed by various sensors provided inside the vehicle.

For example, the vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, and the like.

The interface 130 may serve as a passage for various types of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied by the power supply unit 190, to the mobile terminal under the control of the controller 170.

The memory 140 is electrically connected to the controller 170. The memory 140 may store basic data for each unit, control data for the operational control of each unit, input/output data, and the like. The memory 140 may be any of various hardware storage devices, such as a ROM, a RAM, an EPROM, a flash drive, a hard drive, and the like. The memory 140 may store various data for the overall operation of the vehicle 100, such as programs for the processing or control of the controller 170.

In some implementations, the memory 140 may be integrally formed with the controller 170 or may be provided as a sub-component of the controller 170.

The controller 170 may control the overall operation of each unit inside the vehicle 100. The controller 170 may be referred to as an Electronic Control Unit (ECU).

The power supply unit 190 may supply power required for operation of each component under the control of the controller 170. Particularly, the power supply unit 190 may receive power from a battery inside the vehicle and the like.

One or more processors and the controller 170 included in the vehicle 100 may be implemented by using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, or electric units for the implementation of other functions.

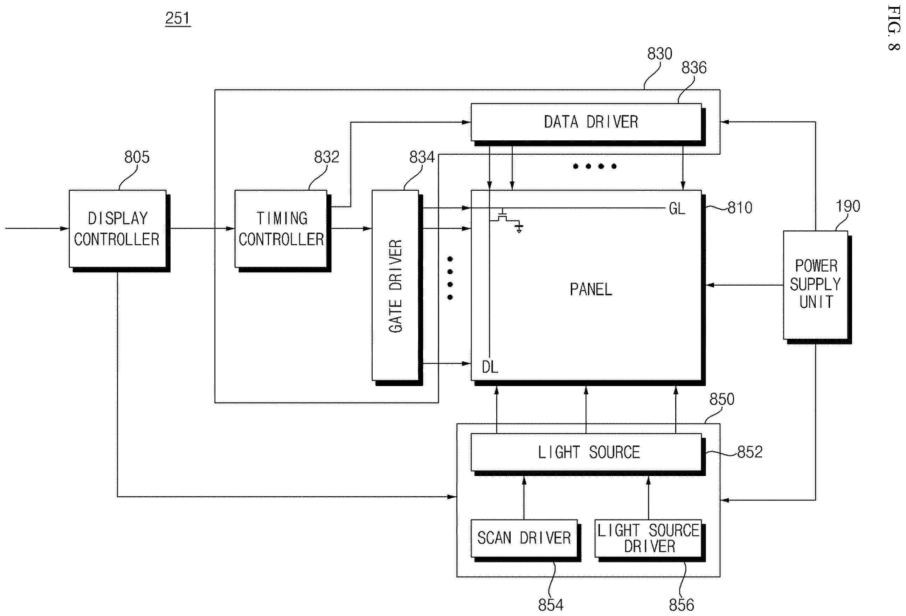

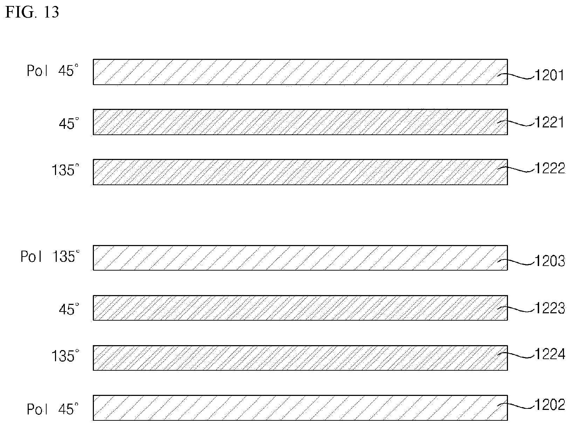

FIGS. 8 to 19 are diagrams referred to in the description of a vehicle display device according to an embodiment of the present disclosure.

Referring to FIG. 8, the vehicle display device 251 may output a predetermined image based on an image signal. For example, the vehicle display device 251 may output graphic objects representing instrument panel information of the vehicle 100, various image contents, etc., based on the image signal.

The vehicle display device 251 may include a display controller 805, a display panel 810, a panel driver 830, and/or a backlight unit 850.

The display controller 805 may receive an image signal from the controller 170. The display controller 805 may process image signals. The display controller 805 may include a decoder, a scaler, a formatter, and the like to process image signals. The display controller 805 may be included in the controller 170. The display controller 805 may be included in the processor 270. The display controller 805 may also be provided separately from the controller 170 and/or the processor 270.

According to an embodiment, the display controller 805 may include a demultiplexer configured to demultiplex the input stream. The demultiplexer may demultiplex the input stream into video, audio, and/or data signals. The decoder may decode the demultiplexed video signal. The scaler may perform scaling so that the resolution of the decoded video signal may be output to the display panel 810.

According to an embodiment, the display controller 805 may include a frame rate converter (FRC) configured to convert the frame rate of an input image. Meanwhile, the frame rate converter may also directly output the frame rate without any additional frame rate conversion.

The formatter may convert the format of an input image signal into an image signal to be displayed and output on the display panel 810.

The demultiplexer, the decoder, the frame rate converter, and/or the formatter may be provided separately instead of being included in the display controller 805, or may be provided separately as one module.

The display panel 810 may include a plurality of pixels P. The plurality of pixels P may be connected to a plurality of gate lines GL and data lines DL that intersect in a matrix form. A plurality of thin film transistors (TFTs) may be disposed at the intersection of the plurality of gate lines GL and data lines DL. The plurality of pixels P may be formed at the intersection of the plurality of data lines DL and the plurality of gate lines GL. Each of the plurality of pixels P may be connected to the data line and the gate line.

In the case where the vehicle display device 251 is a liquid crystal display (LCD) device, the plurality of pixels may include a liquid crystal layer. In the case where the vehicle display device 251 is an organic light emitting diode (OLED) display device, the plurality of pixels may include an organic light emitting diode (OLED).

The display panel 810 may include a first substrate on which a driving element, such as a thin film transistor (TFT), and a pixel electrode connected thereto are formed, a second substrate on which a common electrode is formed, and a liquid crystal layer formed between the first substrate and the second substrate. The arrangement of liquid crystals in the display panel 810 may be of an in-plane switching (IPS) type.

The panel driver 830 may drive the display panel 810 based on a control signal and a data signal transmitted from the display controller 805. The panel driver 830 may include a timing controller 832, a gate driver 834 and/or a data driver 836.

The timing controller 832 may receive a control signal, an image signal, and the like from the display controller 805. For example, the timing controller 832 may receive an RGB signal, a vertical synchronization signal Vsync, and the like from the display controller 805. The timing controller 832 may control the gate driver 834 and/or the data driver 836 in response to the control signal. The timing controller 832 may rearrange the image signal according to specifications of the data driver 836 and transmit it to the data driver 836.

The gate driver 834 and the data driver 836 may supply a scan signal and an image signal to the display panel 810 through the gate lines GL and the data lines DL under the control of the timing controller 832.

Meanwhile, the data driver 836 may include a plurality of source driver integrated circuits (ICs) corresponding to the plurality of data lines DL.

The backlight unit 850 may provide light to the display panel 810. To this end, the backlight unit 850 may include at least one light source 852 configured to output light, a scan driver 854 configured to control scan driving of the light source 852, and/or a light source driver 856 configured to turn on/off the light source 852.

The vehicle display device 251 may display a predetermined image by using light output from the backlight unit 850 while light transmittance of the liquid crystal layer is adjusted by an electric field generated between the pixel electrode and the common electrode of the display panel 810.

The power supply unit 190 may supply a common electrode voltage (Vcom) to the display panel 810. The power supply unit 190 may supply a gamma voltage to the data driver 836. The power supply unit 190 may supply driving power for driving the light source 852 to the backlight unit 850.

Meanwhile, the vehicle display device 251 may be driven by local dimming. The backlight unit 850 may be divided into a plurality of blocks. The backlight unit 850 may be driven for each of the divided blocks. For example, in the case where the backlight unit 850 is driven by local dimming, the display panel 810 may have a plurality of divided areas corresponding to each of the blocks of the backlight unit 850. In this case, the intensity of light emitted from each of the blocks of the backlight unit 850 may be adjusted according to a luminance level, e.g., a peak value of a gray level or a color coordinate signal, of each of the divided areas of the display panel 810. That is, the vehicle display device 251 may reduce the intensity of light emitted from a block corresponding to the dark part of the image and may increase the intensity of light emitted from a block corresponding to the bright part of the image, among the blocks of the backlight unit 850. In this manner, the contrast ratio and sharpness of the image output by the vehicle display device 251 may be improved.

The vehicle display device 251 may set a dimming value for each block, based on a representative value for each block of the backlight unit 850. The display controller 805 may determine the representative value for each block of the backlight unit 850, based on the image signal.

According to an embodiment, the representative value for each block may include the luminance level of the image corresponding to each of blocks of the backlight unit 850. The display controller 805 may determine the luminance level for the entire area and/or a partial area of the image based on the image signal. For example, the display controller 805 may determine an average luminance level (average picture level: APL) for each of the plurality of divided areas corresponding to each of the blocks of the backlight unit 850, an average luminance level for the entire area of image, and the like.

The display controller 805 may calculate a dimming value of each of the blocks of the backlight unit 850 based on the luminance level of the entire area and/or partial area of the image. For example, the display controller 805 may calculate a dimming value of each of the blocks of the backlight unit 850 based on the luminance level of each of the plurality of divided areas, the luminance level of a surrounding area, the luminance level of the entire area, and the like. In this case, the display controller 805 may calculate the dimming value so that the intensity of light emitted from the block in the area with a low luminance level is reduced, and the intensity of light emitted from the block in the area with a high luminance level increases, among the blocks of the backlight unit 850.

The display controller 805 may output the calculated dimming value to the backlight unit 850. The display controller 805 may output a signal including the calculated dimming value to the backlight unit 850. The backlight unit 850 may adjust the intensity of light emitted from the light source 852, based on the dimming value received from the display controller 805.

The light source 852 may be turned on or off according to a driving signal received from the light source driver 856. The light source driver 856 may generate a driving signal based on the dimming value output from the display controller 805. The driving signal may be a pulse width modulation (PWM) signal. For example, the intensity of light emitted from the light source 852 may be adjusted according to an amplitude of the driving signal received from the light source driver 856. For example, the time during which light is emitted from the light source 852 may be adjusted according to the pulse width of the driving signal received from the light source driver 856.

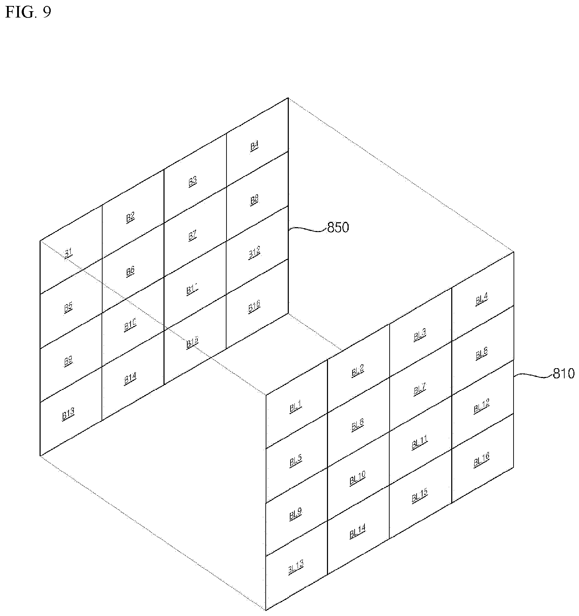

Referring to FIG. 9, the backlight unit 850 according to an embodiment of the present disclosure may be implemented as a direct-type backlight unit.

The display panel 810 may be composed of a plurality of divided areas. FIG. 9 illustrates an example in which the display panel 810 is equally divided into 16 divided areas BL1 to BL16, but it is not limited thereto. Each of the plurality of divided areas BL1 to BL16 may include a plurality of pixels.

The backlight unit 850 may have a structure in which a plurality of optical sheets and a diffusion plate are stacked below the display panel 810, and a plurality of light sources are disposed below the diffusion plate.

The blocks B1 to B16 of the backlight unit 850 may respectively correspond to the divided areas BL1 to BL16 of the display panel 810. For example, a first block B1 of the backlight unit 850 may correspond to a first divided area BL1 of the display panel 810. In this case, the intensity of light incident on the first divided area BL1 of the display panel 810 may be adjusted by the light source 852 included in the first block B1 of the backlight unit 850 disposed at a position corresponding to the first divided area BL1 of the display panel 810.

The light source 852 provided in the blocks B1 to B16 of the backlight unit 850 may be implemented as point light sources such as a light emitting diode (LED).

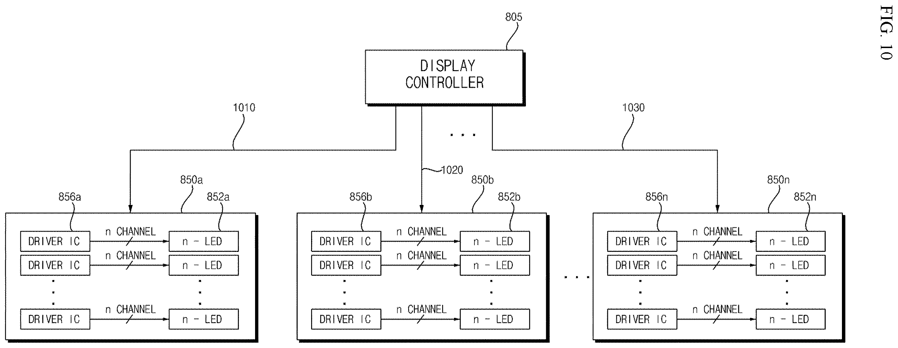

Referring to FIG. 10, the backlight unit 850 may include a plurality of driving units 850a to 850n.

The plurality of driving units 850a to 850n may receive dimming values calculated for a plurality of blocks, a vertical synchronization signal Vsync corresponding to one frame, and the like from the display controller 805. The plurality of driving units 850a to 850n may receive signals using Serial Peripheral Interface (SPI) communication.

The plurality of driving units 850a to 850n may receive dimming values calculated for a plurality of blocks, a vertical synchronization signal Vsync corresponding to one frame, and the like. The plurality of driving units 850a to 850n may receive signals using Serial Peripheral Interface (SPI) communication.

The plurality of driving units 850a to 850n may include light source drivers 856a to 856n and/or a plurality of light sources 852a to 852n.

Each of the light source drivers 856a to 856n may include at least one driver IC. Each of a plurality of driver ICs may output a driving signal for controlling the intensity of n blocks by using n channels. Each of the plurality of driver ICs may output a driving signal for adjusting the intensity of the light source 852, based on the dimming value calculated for the plurality of blocks. For example, in the case where each driver IC outputs a driving signal by using 16 channels, each driver IC may adjust the intensity of the light source 852 included in 16 blocks. In this case, in the case where a first light source driver 856a includes four driver ICs, the first light source driver 856a may adjust the intensity of the light sources 852 included in 4x16, i.e., 64 blocks, among the divided blocks of the backlight unit 850.

Each of the plurality of driving units 850a to 850n may include a substrate. For example, the substrate may be a printed circuit board (PCB). Components included in the plurality of driving units 850a to 850n, for example, driver ICs, may be respectively mounted on a plurality of substrates corresponding to the plurality of driving units 850a to 850n. Substrates corresponding to the plurality of driving units 850a to 850n may be disposed adjacent to each other in the order of the divided blocks of the backlight unit 850.

Each of the plurality of driving units 850a to 850n may be electrically connected to the display controller 805 through cables 1010 to 1030 corresponding to the plurality of driving units 850a to 850n. For example, the cables 1010 to 1030 corresponding to the plurality of driving units 850a to 850n may be respectively connected to connectors mounted on the substrates corresponding to the plurality of driving units 850a to 850n.

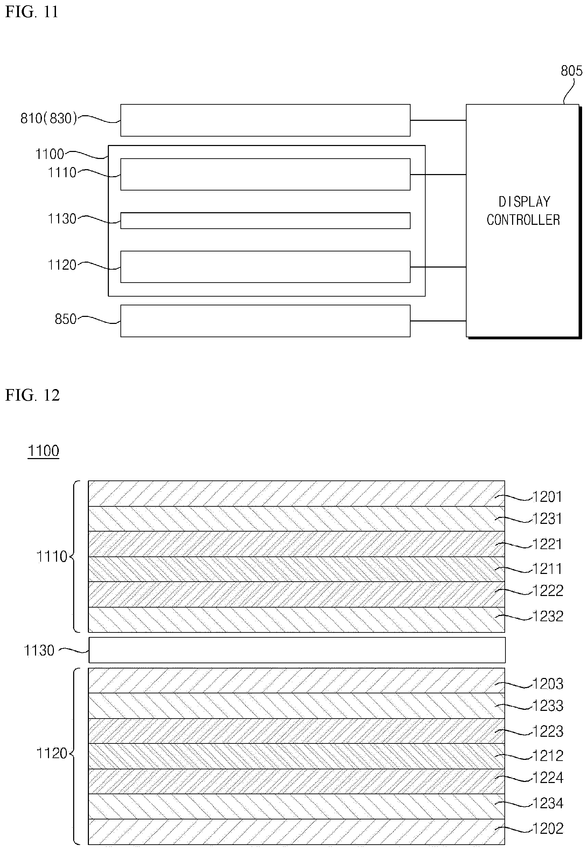

Referring to FIGS. 11 to 13, the vehicle display device 251 may include a viewing angle adjustment panel 1100.

The viewing angle adjustment panel 1100 may adjust a viewing angle of the display panel 810. Here, the viewing angle may refer to the angle at which a user may view an image on the display panel 810 with a predetermined image quality or higher. The viewing angle adjustment panel 1100 may adjust the viewing angle under the control of the display controller 805.

The viewing angle adjustment panel 1100 may include a first adjuster 1110, a second adjuster 1120, and/or a film 1130. The film 1130 may be configured to restrict the emission of light at a predetermined angle. According to an embodiment, the film 1130 may be disposed between the first adjuster 1110 and the second adjuster 1120, but is not limited thereto. For example, the film 1130 may be disposed at the top of the first adjuster 1110, at the bottom of the second adjuster 1120, and the like.

The first adjuster 1110 and the second adjuster 1120 may respectively include liquid crystal layers 1211 and 1212 including liquid crystals. Each of the first adjuster 1110 and the second adjuster 1120 may include a plurality of alignment layers that define the arrangement of liquid crystals included in the liquid crystal layers 1211 and 1212. The orientation of the liquid crystals included in the liquid crystal layers 1211 and 1212 may be defined by the characteristics of the liquid crystals and pattern of the plurality of alignment layers.

The first adjuster 1110 may include a first upper alignment layer 1221 disposed on the upper side of a first liquid crystal layer 1211 and a first lower alignment layer 1222 disposed on the lower side of the first liquid crystal layer 1211. For example, the direction in which the liquid crystals are arranged by the first upper alignment layer 1221 and the direction in which the liquid crystals are arranged by the first lower alignment layer 1222 may be perpendicular to each other. The second adjuster 1120 may include a second upper alignment layer 1223 disposed on the upper side of a second liquid crystal layer 1212 and a second lower alignment layer 1224 disposed on the lower side of the second liquid crystal layer 1212. For example, the direction in which the liquid crystals are arranged by the second upper alignment layer 1223 and the direction in which the liquid crystals are arranged by the second lower alignment layer 1224 may be perpendicular to each other.

Each of the first adjuster 1110 and the second adjuster 1120 may include a plurality of substrates on which electrodes are formed. The electrode may be formed of a metal oxide such as Indium Tin Oxide (ITO) or Indium Zinc Oxide (IZO), but is not limited thereto. The first adjuster 1110 may include a first upper substrate 1231 disposed on the upper side of the first liquid crystal layer 1211 and a first lower substrate 1232 disposed on the lower side of the first liquid crystal layer 1211. The second adjuster 1120 may include a second upper substrate 1233 disposed on the upper side of the second liquid crystal layer 1212 and a second lower substrate 1234 disposed on the lower side of the second liquid crystal layer 1212.

The display controller 805 may adjust a viewing angle by controlling the arrangement of liquid crystals included in the liquid crystal layers 1211 and 1212. The viewing angle may be changed according to a degree of change in the arrangement of the liquid crystals in the liquid crystal layers 1211 and 1212. According to an embodiment, the arrangement of liquid crystals may be of a twisted nematic (TN) type, but is not limited thereto. For example, the liquid crystal arrangement type may include super-twisted nematic (STN), vertically aligned nematic (VAN), twisted vertically aligned nematic (TVAN), hybrid aligned nematic (HAN), and the like.

The display controller 805 may control the voltage applied to the electrodes of the plurality of substrates. The arrangement of liquid crystals included in the liquid crystal layers 1211 and 1212 may be chanced according to the difference (hereinafter referred to as voltage difference) between the voltages applied to the electrodes of the plurality of substrates. For example, the arrangement of liquid crystals corresponding to the first electrode and the second electrode may be changed according to the voltage difference between a first electrode of the first upper substrate 1231 and a second electrode of the first lower substrate 1232 corresponding to the first electrode.

According to an embodiment, as the voltage difference between the electrode of the first upper substrate 1231 and the electrode of the first lower substrate 1232 increases, a degree of change in arrangement of liquid crystals included in the first liquid crystal layer 1211 may also increase. In this case, the viewing angle may decrease as the degree of change in the arrangement of liquid crystals included in the liquid crystal layers 1211 and 1212 increases. For example, in the case where the voltage difference between the electrode of the first upper substrate 1231 and the electrode of the first lower substrate 1232 is a preset minimum value of 0 V, light may be emitted as it is through the liquid crystal layers 1211 and 1212. For example, in the case where the voltage difference between the electrode of the first upper substrate 1231 and the electrode of the first lower substrate 1232 is a preset maximum value of 4V or higher, light may be blocked by the liquid crystal layers 1211 and 1212.

The viewing angle adjustment panel 1100 may include a plurality of polarizing plates. According to an embodiment, the viewing angle adjustment panel 1100 may include a first polarizing plate 1201 disposed at the top, a second polarizing plate 1202 disposed at the bottom, and/or a third polarizing plate 1203 disposed between the plurality of liquid crystal layers 1211 and 1212. For example, the first polarizing plate 1201 may be disposed at the top of the first adjuster 1110, and the second polarizing plate 1202 and the third polarizing plate 1203 may be disposed at the top and bottom of the second adjuster 1120, respectively. According to an embodiment, the polarization axis of the first polarizing plate 1201 and the polarization axis of the second polarizing plate 1202 may be parallel to each other. The polarization axis of the third polarizing plate 1203 may be perpendicular to the polarization axis of the first polarizing plate 1201 and the polarization axis of the second polarizing plate 1202.

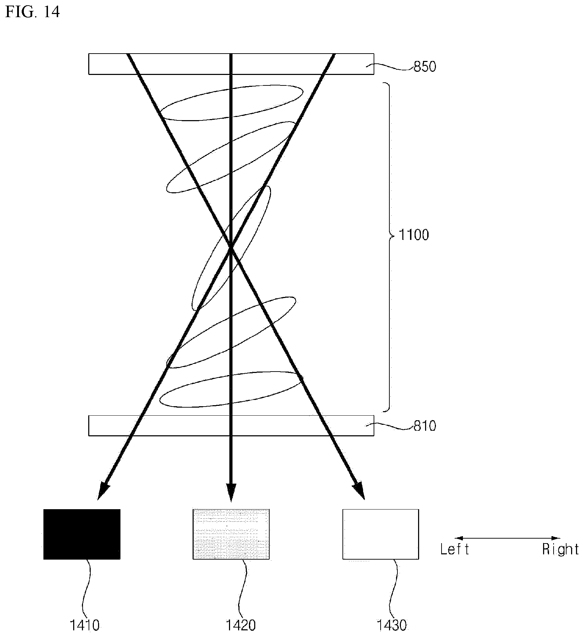

Referring to FIG. 14, light output from the backlight unit 850 may pass through the viewing angle adjustment panel 1100 to be emitted through the display panel 810. In this case, when the arrangement of liquid crystals included in the viewing angle adjustment panel 1100 is changed, the luminance of an image output through the vehicle display device 251 may vary depending on the angle at which a user views the display panel 810.

According to an embodiment, when a user views the display panel 810 from the left side based on the overall length direction, the luminance of the screen viewed by the user may be relatively low compared to the front or right side (1410). In addition, as a user moves from left to right, the luminance of the screen viewed by the user may gradually increase (1420, 1430).

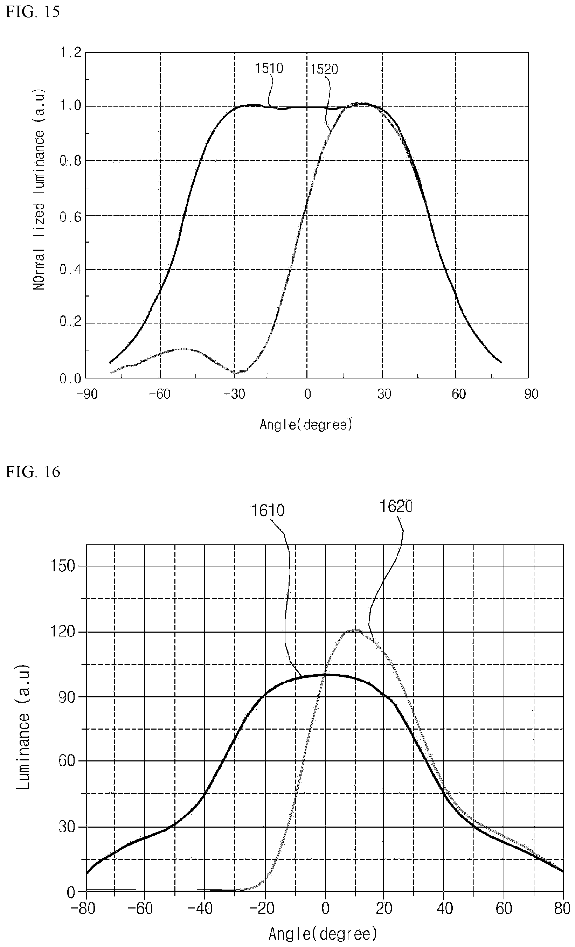

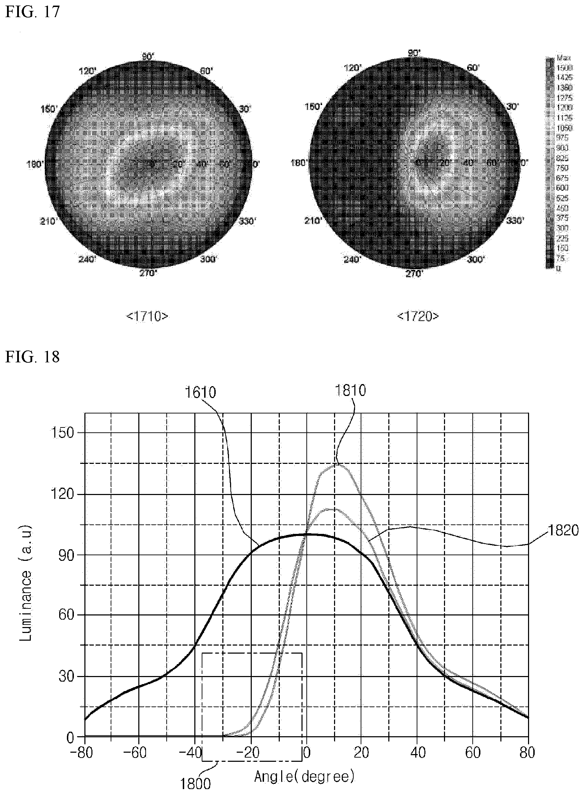

FIG. 15 is a diagram referred to in the description of the case in which the film 1130 is not included in the viewing angle adjustment panel 1100, according to an embodiment of the present disclosure. FIGS. 16 and 17 are diagrams referred to in the description of the case in which the film 1130 is included in the viewing angle adjustment panel 1100, according to an embodiment of the present disclosure.

In the present disclosure, an example is illustrated in which the driver's seat is disposed on the left and the passenger seat is disposed on the right based on the overall length direction, but the present disclosure is not limited thereto. For example, the present disclosure may be applied to an example in which the driver's seat is disposed on the right and the passenger seat is disposed on the left, or an example in which the driver's seat is disposed at the center and the passenger seat is disposed on both sides, based on the overall length direction.

Referring to FIG. 15, a viewing angle of the display panel 810 may be determined based on whether a predetermined mode is set for adjusting the viewing angle by the viewing angle adjustment panel 1100. In the case where the predetermined mode is set, the arrangement of liquid crystals included in the viewing angle adjustment panel 1100 may be changed to adjust the viewing angle. Accordingly, a luminance level 1510 of an image output to one area of the display panel 810 when the predetermined mode is not set may be different from a luminance level 1520 when the predetermined mode is set.

Based on the luminance level 1510 of the image output to one area of the display panel 810 when the predetermined mode is not set and the luminance level 1520 when the predetermined mode is set, a user may view the image, output to one area of the display panel 810, at various angles without distortion when the predetermined mode is not set. Based on the luminance level 1510 when the predetermined mode is not set, a user may view the image without distortion while maintaining the viewing angle of one area of the display panel 810 at -30° to 30°. Meanwhile, as the angle at which the user views one area of the display panel 810 decreases below -30° or increases above 30°, the luminance of the screen that the user views through one area of the display panel 810 may decrease. That is, even when the predetermined mode is not set, the viewing angle may be restricted by the viewing angle adjustment panel 1100 disposed between the display panel 810 and the backlight unit 850.

Based on the luminance level 1520 when the predetermined mode is set, as the angle at which a user views one area of the display panel 810 decreases below 0°, the luminance of the screen that the user views through one area of the display panel 810 may decrease. That is, when the predetermined mode is set, as a user moves to the left where the driver's seat is located, the luminance of the screen that the user views through one area of the display panel 810 may decrease.

In addition, if the angle between a user and one area of the display panel 810 is - 30°, the luminance of the screen that the user views through one area of the display panel 810 may be at a lowest level. However, in the case where the angle between a user and one area of the display panel 810 is less than -30°, the luminance of the screen that the user views through one area of the display panel 810 may increase again.

Referring to FIGS. 16 and 17, in the case where the viewing angle adjustment panel 1100 includes the film 1130, as the angle at which a user views one area of the display panel 810 decreases below 0°, the luminance of the screen that the user views through one area of the display panel 810 may decrease. However, the viewing angle may be wider in the case where a predetermined mode is not set (1610, 1710), compared to the case where the predetermined mode is set (1620, 1720).

Meanwhile, in the case where the predetermined mode is set (1620, 1720), if the angle between a user and one area of the display panel 810 is -25°, the luminance of the screen that the user views through one area of the display panel 810 may be at a lowest level. In this case, the emission of light is restricted by the film 1130, such that even when the angle between a user and one area of the display panel 810 is less than - 25°, the luminance of the screen that the user views through one area of the display panel 810 may be at a lowest level. Accordingly, if the angle between one area of the display panel 810 and the driver's seat is less than -25°, a user sitting in the driver's seat may be blocked from viewing the image output to one area of the display panel 810.

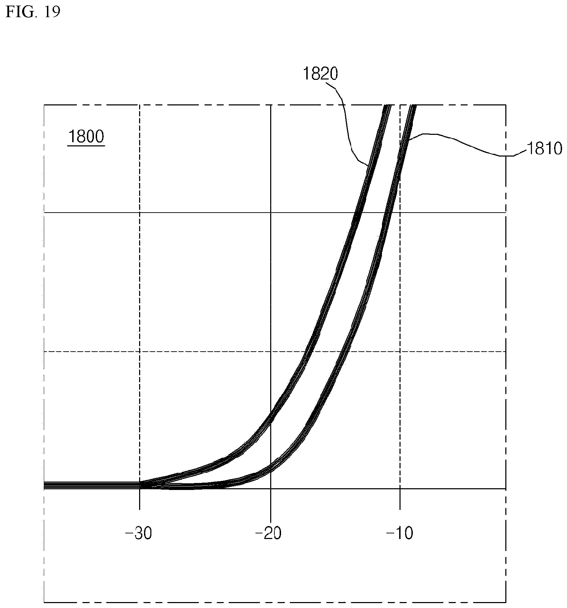

Referring to FIGS. 18 and 19, in the case where a voltage difference between the electrodes is a first voltage (e.g., 2.43 V) (1810), if an angle between a user and one area of the display panel 810 is less than -23°, the luminance of the screen that the user views through one area of the display panel 810 may be at a lowest level. By contrast, when a voltage difference between the electrodes is a first voltage (e.g., 2.35 V) (1820), if an angle between a user and one area of the display panel 810 is less than -28°, the luminance of the screen that the user views through one area of the display panel 810 may be at a lowest level.

That is, the vehicle display device 251 may change the viewing angle by adjusting the voltage difference between the electrodes of the plurality of substrates. In addition, as the voltage difference between the electrodes of the plurality of substrates increases, the viewing angle of the display panel 810 may decrease.

The vehicle display device 251 may adjust the viewing angle of the display panel 810, based on the position of a user (hereinafter referred to as a driver) sitting in the driver's seat. For example, if the angle between the driver and one area of the display panel 810 is -28°, the vehicle display device 251 may set the voltage difference between the electrodes to 2.35 V. In this case, if the driver moves to the right, such that the angle between the driver and one area of the display panel 810 is - 23°, the vehicle display device 251 may change the voltage difference between the electrodes to 2.43 V. In this manner, even when a driver's position changes, it is possible to block the driver from viewing the image output to one area of the display panel 810.

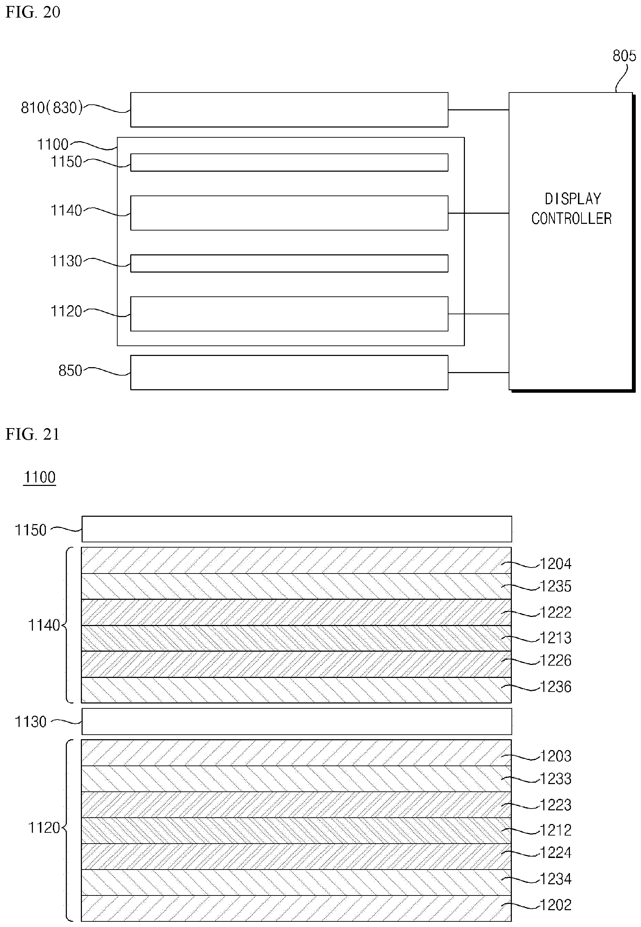

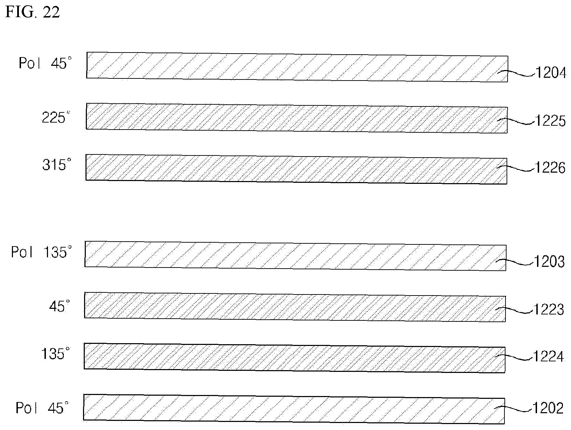

FIGS. 20 to 23 are diagrams referred to in the description of a vehicle display device according to an embodiment of the present disclosure. A detailed description of portions overlapping those described above with reference to FIGS. 11 to 19 will be omitted.

Referring to FIGS. 20 and 21, the viewing angle adjustment panel 1100 may include a second adjuster 1120 and a third adjuster 1140.

The third adjuster 1140 may correspond to the first adjuster 1110 rotating 180 degrees about a rotation axis that is parallel to a vertical direction in which components of the viewing angle adjustment panel 1100 are stacked.

The third adjuster 1140 may include a third liquid crystal layer 1213 including liquid crystals. The third adjuster 1140 may include a third upper alignment layer 1225 disposed on the upper side of the third liquid crystal layer 1213 and a third lower alignment layer 1226 disposed on the lower side of the third liquid crystal layer 1213. The orientation of the liquid crystals included in the third liquid crystal layer 1213 may be defined by the characteristics of the liquid crystals and pattern of a plurality of third lower alignment layers 1225 and 1226.

The direction in which the liquid crystals are arranged by the third upper alignment layer 1225 and the direction in which the liquid crystals are arranged by the third lower alignment layer 1226 may be perpendicular to each other. The direction in which the liquid crystals are arranged by the third upper alignment layer 1225 may be opposite to the direction in which the liquid crystals are arranged by the first upper alignment layer 1221. The direction in which the liquid crystals are arranged by the third lower alignment layer 1226 may be opposite to the direction in which the liquid crystals are arranged by the first lower alignment layer 1222.

The third adjuster 1140 may include a third upper substrate 1235 disposed on the upper side of the third liquid crystal layer 1213 and a third lower substrate 1236 disposed on the lower side of the third liquid crystal layer 1213. The arrangement of liquid crystals included in the third liquid crystal layer 1213 may be changed according to the voltage difference between the electrodes of the plurality of third substrates 1235 and 1236.

As the voltage difference between the electrode of the third upper substrate 1235 and the electrode of the third lower substrate 1236 increases, the degree of change in arrangement of the liquid crystals in the third liquid crystal layer 1213 may increase. In this case, as the degree of change in arrangement of the liquid crystals in the third liquid crystal layer 1213 increases, the viewing angle may decrease. For example, if the emission of light toward the driver's seat is restricted as the arrangement of the liquid crystals included in the first liquid crystal layer 1211 of the first adjuster 1110 is changed, the arrangement of the liquid crystals included in the third liquid crystal layer 1213 of the third adjuster 1140 is changed, thereby restricting the light emission toward the passenger seat.

According to an embodiment, the viewing angle adjustment panel 1100 may include a plurality of films 1130 and 1140.

A first film 1130 may be disposed on the upper side of the second adjuster 1120. The first film 1130 may be configured to restrict light emission at a first angle corresponding to the second adjuster 1120. For example, when the light emission toward the driver's seat is restricted as the arrangement of the liquid crystals included in the second liquid crystal layer 1212 of the second adjuster 1120 is changed, the first film 1130 may be configured to restrict light emission toward the driver's seat at a predetermined angle.

A second film 1150 may be disposed on the upper side of the third adjuster 1140. The second film 1150 may be configured to restrict light emission at a second angle corresponding to the third adjuster 1140. For example, when the light emission toward the passenger seat is restricted as the arrangement of the liquid crystals included in the third liquid crystal layer 1213 of the third adjuster 1140 is changed, the second film 1150 may be configured to restrict light emission toward the passenger seat at a predetermined angle.

In the present disclosure, it is illustrated that the viewing angle adjustment panel 1100 includes the third adjuster 1140 corresponding to the first adjuster 1110, but is not limited thereto.

According to an embodiment, the viewing angle adjustment panel 1100 may include a fourth adjuster corresponding to the first adjuster 1110 and the second adjuster 1120. In this case, the fourth adjuster may correspond to the second adjuster 1120 rotating 180 degrees about a rotation axis that is parallel to a vertical direction in which components of the viewing angle adjustment panel 1100 are stacked. For example, the vehicle display device 251 may restrict light emission toward the driver's seat by using the first adjuster 1110, and may restrict light emission toward the passenger seat by using the fourth adjuster.

According to an embodiment, the vehicle display device 251 may include a plurality of viewing angle adjustment panels. The plurality of viewing angle adjustment panels may be stacked and disposed in the vertical direction. One of the plurality of viewing angle adjustment panels may correspond to the viewing angle adjustment panel 1100 shown in FIGS. 11 to 13. A remaining one of the plurality of viewing angle adjustment panels may correspond to the viewing angle adjustment panel 1100 rotating 180° about a rotation axis that is parallel to the vertical direction. For example, the vehicle display device 251 may restrict light emission toward the driver's seat by using one of the plurality of viewing angle adjustment panels, and may restrict light emission toward the passenger seat by using the remaining one of the plurality of viewing angle adjustment panels.

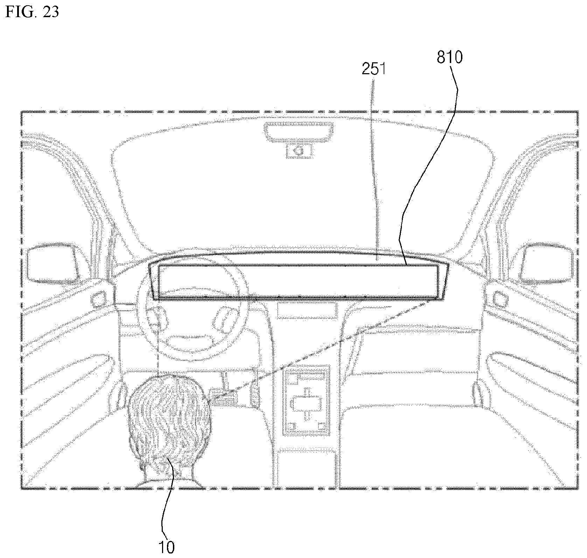

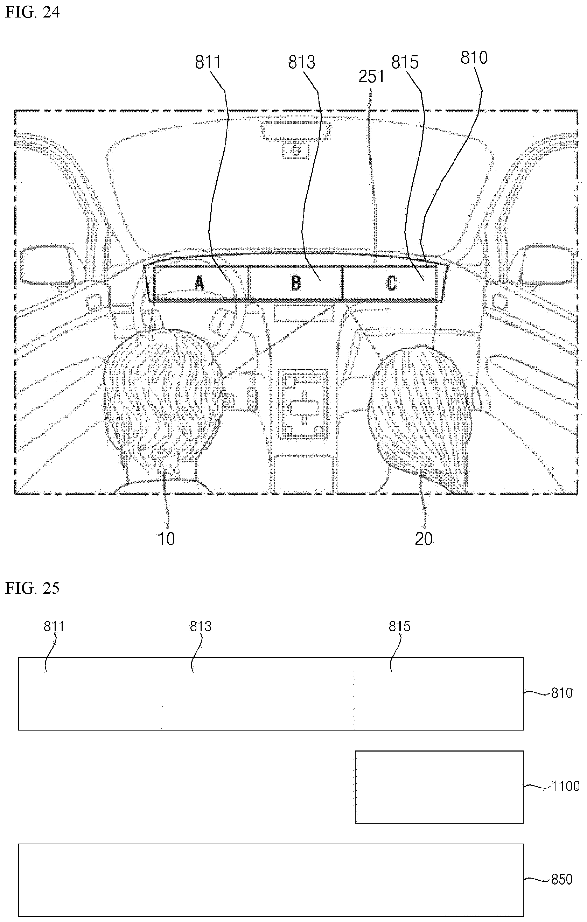

Referring to FIGS. 23 and 24, a display panel 810 corresponding to the instrument panel may be disposed in front of the driver 10 and/or a user 20 (hereinafter referred to as a passenger) sitting in the passenger seat. The driver 10 may gaze at the entire area of the display panel 810.

The display panel 810 may include a first area 811 corresponding to the driver 10, a second area 813 corresponding to the driver 10 and the passenger 20, and/or a third area 815 corresponding to the passenger 20. In this disclosure, an example is illustrated in which the display panel 810 includes the three areas 811, 813, and 815, but is not limited thereto.

The vehicle display device 251 may output an image to at least one area of the display panel 810. For example, the vehicle display device 251 may output an instrument panel screen, including driving speed, driving distance, etc., to the first area 811. For example, the vehicle display device 251 may output a control screen for controlling devices in the vehicle 100, such as a lamp device an air conditioning device, etc., a screen including navigation information, and the like to the second area 813. For example, the vehicle display device 251 may output video content, such as movies, games, etc., to the third area 815.

Referring to FIGS. 25 to 27, the viewing angle adjustment panel 1100 may be disposed to correspond to at least a portion of the plurality of areas of the display panel 810.

Referring to FIG. 25, the viewing angle adjustment panel 1100 may be disposed to correspond to the third area 815 of the display panel 810. In the case where the arrangement of the liquid crystals included in the viewing angle adjustment panel 1100 is changed, the viewing angle of at least a portion of the third area 815 may be adjusted. For example, if a predetermined mode is set, the vehicle display device 251 may adjust the viewing angle for the entire third area 815. In this case, a restricted area may correspond to the entire third area 815.

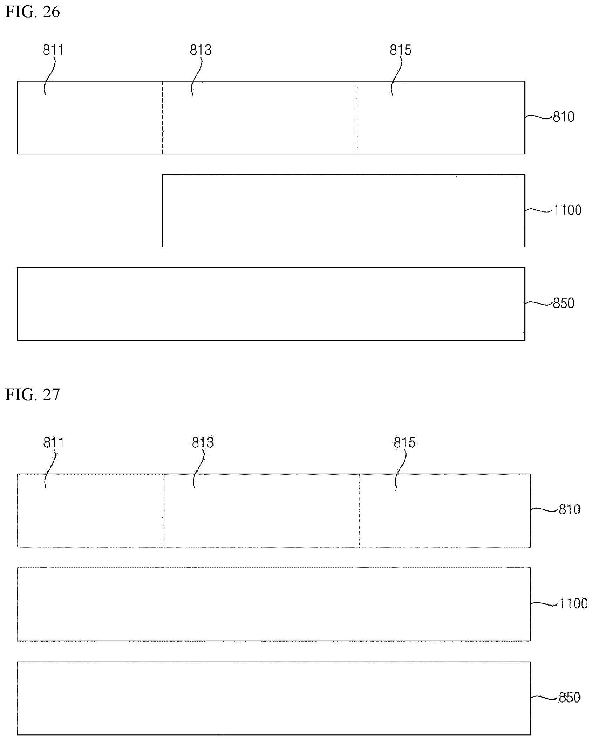

Referring to FIG. 26, the viewing angle adjustment panel 1100 may be disposed to correspond to the second area 813 and the third area 815 of the display panel 810. In the case where the arrangement of the liquid crystals included in the viewing angle adjustment panel 1100 is changed, the viewing angle of at least a portion of the second area 813 and the third area 815 may be adjusted. For example, if a predetermined mode is set, the vehicle display device 251 may adjust the viewing angle for the third area 815, of the second area 813 and the third area 815.

Referring to FIG. 27, the viewing angle adjustment panel 1100 may be disposed to correspond to the first area 811, the second area 813, and the third area 815 of the display panel 810. If the arrangement of the liquid crystals included in the viewing angle adjustment panel 1100 disposed to correspond to the first area 811 is changed, light emitted toward the passenger seat through the first area 811 may be blocked. If the arrangement of the liquid crystals included in the viewing angle adjustment panel 1100 disposed to correspond to the second area 813 and the third area 813 is changed, light emitted toward the driver's seat side through at least a portion of the second area 813 and the third area 815 may be blocked.

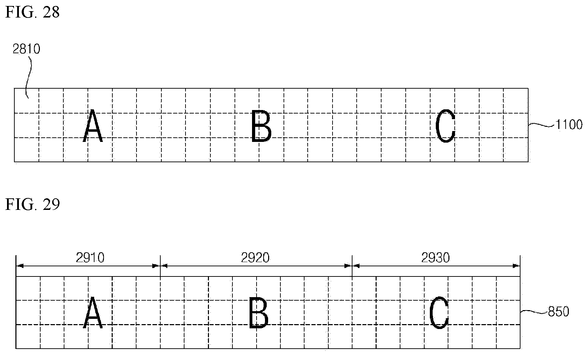

Referring to FIG. 28, the viewing angle adjustment panel 1100 may include a plurality of subunits 2510 that independently control the arrangement of liquid crystals. The plurality of subunits 2510 may be disposed side by side in the area where the viewing angle adjustment panel 1100 is disposed. The plurality of subunits 2510 may be disposed to correspond to each area of the display panel 810.

The vehicle display device 251 may apply a predetermined voltage to the subunits 2510 so that the arrangement of liquid crystals included in the subunits 2510 is changed. In this case, as the voltage applied to the subunits 2510 increases, the voltage difference between the electrodes of the plurality of substrates included in the subunits 2510 may increase. For example, if the third area 815 corresponds to a restricted area, the vehicle display device 251 may apply a predetermined voltage to the subunit 2510 corresponding to the third area 815 so that the arrangement of liquid crystals included in the subunit 2510 corresponding to the third area 815 is changed. For example, if the second area 813 and the third area 815 correspond to a restricted area for the driver's seat, the vehicle display device 251 may apply a first voltage to the subunit 2510 corresponding to the second area 813, and may apply a second voltage, lower than the first voltage, to the subunit 2510 corresponding to the third area 815.

Referring to FIG. 26, a plurality of blocks included in the backlight unit 850 may be disposed to correspond to each area of the display panel 810. The vehicle display device 251 may adjust the intensity of light output from each of the plurality of blocks included in the backlight unit 850. For example, the backlight unit 850 may include a first block 2610 corresponding to the first area 811, a second block 2620 corresponding to the second area 813, and a third block 2630 corresponding to the third area 815. **In** this case, if the third area 815 corresponds to a restricted area, the vehicle display device 251 may adjust the intensity of light output from at least a portion of the third block 2630 according to a predetermined compensation value.

FIG. 27 is a flowchart illustrating a method of operating a vehicle display device according to an embodiment of the present disclosure. Hereinafter, it may be understood that at least some of the operations performed by the vehicle display device 251 is performed by the controller 170 and/or the processor 270.

Referring to FIG. 27, the vehicle display device 251 may determine whether a condition related to driving of the vehicle 100 (hereinafter referred to as a safety-related condition) is satisfied in operation S3010. Here, the safety-related condition may correspond to a safety-related condition during driving of the vehicle 100.

According to an embodiment, the vehicle display device 251 may determine whether the safety-related condition is satisfied, based on at least one of the speed of the vehicle 100, the state of a transmission, setting of the autonomous driving mode, use of an area of the display panel 810 in which the viewing angle is adjusted, the type of an image output through the display panel 810, and a user's gaze. For example, in response to receiving a user input for adjusting the viewing angle of the display panel 810 through the input unit 210 during driving, the vehicle display device 251 may determine that the safety-related condition is satisfied. For example, the vehicle display device 251 may determine that if the speed of the vehicle 100 is higher than or equal to a preset speed limit (e.g., 10 km/h), this corresponds to the safety-related condition, and if the speed of the vehicle 100 is lower than the preset speed limit (e.g., 10 km/h), this does not correspond to the safety-related condition. For example, the vehicle display device 251 may determine that if the autonomous driving mode is set, this corresponds to the first mode, and if the manual mode is set, this does not correspond to the first mode. For example, the vehicle display device 251 may determine that if only driving-related content (e.g., instrument panel, navigation information) is output to the display panel 810, this does not correspond to the safety-related condition.

According to an embodiment, the vehicle display device 251 may determine the safety-related condition in the case where the state of a transmission is drive (D), reverse (R), or neutral (N), and may stop determining the safety-related condition in the case of parking (P).

According to an embodiment, data corresponding to the eyes of a user sitting in the driver's seat may be acquired through the internal camera 220 provided in the vehicle 100. In this case, the vehicle display device 251 may stop determining the safety-related condition, upon determining that the driver's gaze is directed forward based on driver's gaze information.

If the safety-related condition is satisfied, the vehicle display device 251 may determine a restricted area of the display panel 810 related to safety while driving (hereinafter referred to as a safety-related area).

According to an embodiment, if the safety-related condition is satisfied, the vehicle display device 251 may determine one area of the display panel 810, which is adjacent to the passenger seat, to be a safety-related area. For example, one area of the display panel 810 adjacent to the passenger seat may include at least the third area 815. Meanwhile, an area of the safety-related area may increase as the speed of the vehicle 100 increases. For example, if the speed of the vehicle 100 is lower than a first speed (e.g., 60 km/h), the third area 815 may be included in the safety-related area. For example, if the speed of the vehicle 100 is equal to or higher than the first speed (e.g., 60 km/h) and lower than a second speed (e.g., 80 km/h), the third area 815 and a portion of the second area 813 adjacent to the third area 815 may be included in the safety-related area. For example, if the speed of the vehicle 100 is equal to or higher than a third speed (e.g., 100 km/h), the second area 813 and the third area 815 may be included in the safety-related area. That is, as the speed of the vehicle 100 increases, an area of the second area 813 included in the safety-related area may increase in a direction toward the driver's seat. In this case, as the speed of the vehicle 100 changes, an area of the second area 813 included in the safety-related area may gradually change.

According to an embodiment, the vehicle display device 251 may determine a safety-related area based on the type of content output to the display panel 810. For example, based on driving-related content (e.g., instrument panel, navigation information) being output to the display panel 810, the vehicle display device 251 may determine, as the safety-related area, a remaining area of the display panel 810 excluding an area in which the driving-related is output. For example, based on video content, such as a movie, game, OTT service, etc., being output to the display panel 810, the vehicle display device 251 may determine, as the safety-related area, an area of the display panel 810 in which the video content is output.

The vehicle display device 251 may determine whether a condition related to privacy (hereinafter referred to as a privacy-related condition) is satisfied in operation S3030. Here, the privacy-related condition may include at least one of a condition related to privacy of the driver 10 and a condition related to privacy of the passenger 20. For example, in the case where content corresponding to the passenger seat is output to the display panel 810, the vehicle display device 251 may determine that this corresponds to a condition related to privacy of the passenger 20. In this case, the content corresponding to the passenger seat may include content transmitted from a mobile device of the passenger 20 to the vehicle 100, content preset to correspond to the passenger 20, and the like.

Meanwhile, according to an embodiment, the vehicle display device 251 may determine the privacy-related condition based on whether the passenger 20 sits in the passenger seat. For example, data corresponding to the passenger seat may be acquired through the internal camera 220 provided in the vehicle 100. In this case, the vehicle display device 251 may determine the privacy-related condition based on the passenger 20 sitting in the passenger seat. Meanwhile, the vehicle display device 251 may stop determining the privacy-related condition based on the passenger 20 not sitting in the passenger seat.

If the privacy-related condition is satisfied, the vehicle display device 251 may determine a restricted area related to privacy (hereinafter referred to as a privacy-related area) on the display panel 810 in operation S3040. For example, if a message transmitted from the mobile device of the passenger 20 to the vehicle 100 is output to the second area 813 of the display panel 810, the second area 813 may be determined as the privacy-related area. For example, if video content previously set as exclusive content for the passenger 20 is output to the third area 815 of the display panel 810, the third area 815 may be determined as the privacy-related area.

The vehicle display device 251 may adjust the viewing angle for the restricted area in operation S3050. The vehicle display device 251 may apply a voltage to the viewing angle adjustment panel 1100 corresponding to one area of the display panel 810 that is determined as at least one of the safety-related area and the privacy-related area. For example, if the third area 815 is determined as the safety-related area, and the second area 813 is determined as the privacy-related area, the vehicle display device 251 may apply a voltage to the plurality of subunits 2510 each corresponding to the second area 813 and the third area 815.

According to an embodiment, data corresponding to the eyes of a user sitting in the driver's seat may be acquired through the internal camera 220 provided in the vehicle 100. In this case, upon determining that the driver's gaze is directed forward based on driver's gaze information, the vehicle display device 251 may release the restriction on light emission toward the driver's seat. For example, if the driver's gaze is directed forward, the vehicle display device 251 may stop applying voltage to the second upper substrate 1233 and the second lower substrate 1234.

According to an embodiment, data corresponding to the driver's seat and/or passenger seat may be acquired through the internal camera 220 provided in the vehicle 100. In this case, based on the driver 10 not sitting in the driver's seat, the vehicle display device 251 may release the restriction on light emission toward the driver's seat. For example, if the driver 10 does not sit in the driver's seat, the vehicle display device 251 may stop applying voltage to the second upper substrate 1233 and the second lower substrate 1234. Further, in this case, based on the passenger 20 not sitting in the passenger seat, the vehicle display device 251 may release the restriction on light emission toward the passenger seat. For example, if the passenger 20 does not sit in the passenger seat, the vehicle display device 251 may stop applying voltage to the third upper substrate 1235 and the third lower substrate 1236.

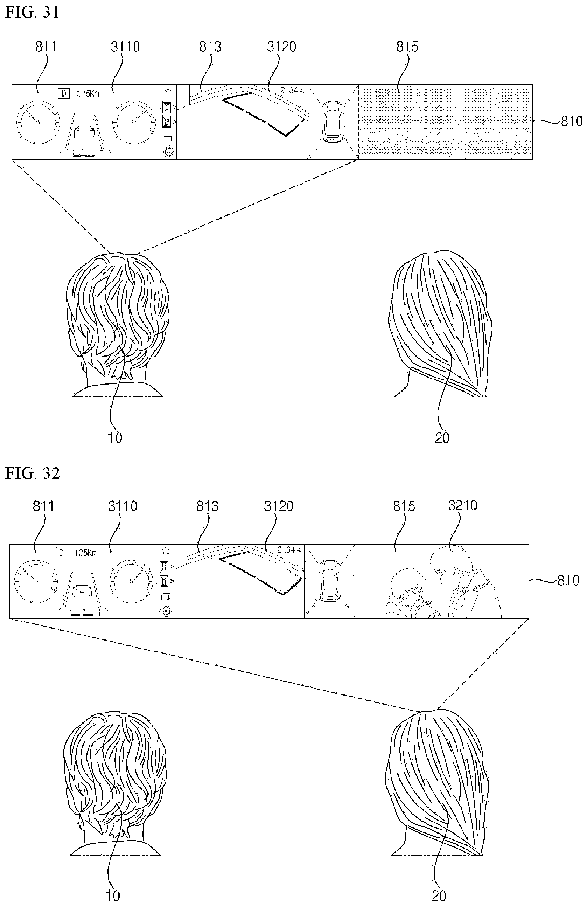

Referring to FIGS. 31 and 32, an instrument panel screen 3110 may be output to the first area 811 of the display panel 810. In addition, an around view monitor screen 3120 may be output through the camera 310 to the second area 813 of the display panel 810. In this case, as the instrument panel screen and the around view monitor screen correspond to driving-related content, the vehicle display device 251 may determine, as the safety-related area, a remaining area excluding the first area 811 and the second area 813.

Movie-related content 3210 may be output to the third area 815 of the display panel 810. In this case, the vehicle display device 251 may determine, as the safety-related area, the third area 815 of display panel 810 in which the movie-related content corresponding to video content is output. Meanwhile, if movie-related video content is transmitted from the mobile device of the passenger 20 or is preset as exclusive content for the passenger 20, the vehicle display device 251 may determine the third area 815 of the display panel 810 as the privacy-related area. In this case, the third area 815, in which the movie-related content 3210 is output, may correspond to a restricted area related to privacy of the passenger seat (hereinafter referred to as a passenger seat-related area) in the privacy-related area.

The vehicle display device 251 may restrict light emission toward the passenger seat from the third area 815 of the display panel 810 that is determined as the safety-related area and/or the passenger seat-related area. The vehicle display device 251 may apply voltage to the second upper substrate 1233 and the second lower substrate 1234 which are disposed in one area of the viewing angle adjustment panel 110 that corresponds to the third area 815 of the display panel 810. In this case, the arrangement of the liquid crystals in the second liquid crystal layer 1212 corresponding to the third area 815 is changed, thereby restricting light emission from the third area 815 toward the driver's seat.

Accordingly, while the safety-related condition that is related to driving of the vehicle 100 is satisfied, the driver 10 may view only the instrument panel screen 3110 and the around view monitor screen 3120 and may not view the movie-related video content 3210. In addition, even when the safety-related condition that is related to driving of the vehicle 100 is not satisfied, the driver 10 may not view the movie-related video content 3210. Meanwhile, the passenger 20 may view all of the instrument panel screen 3110, the around view monitor screen 3120, and the movie-related content 3210.

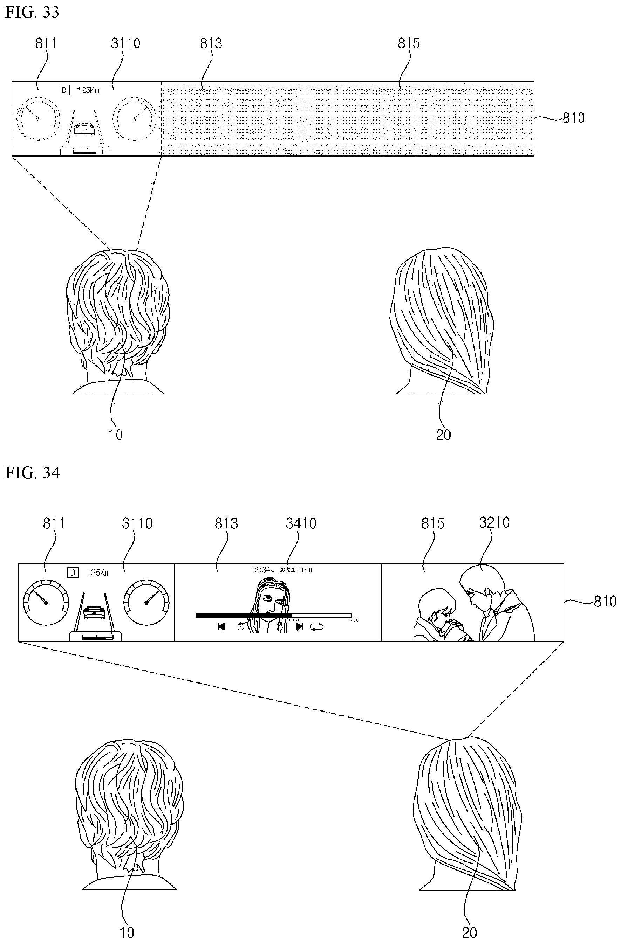

In the following description with reference to FIGS. 33 to 44, it is illustrated that the first area 811 of the display panel 810, to which the instrument panel screen 3110 is output, is not included in the safety-related area and the passenger seat-related area. In addition, it is illustrated that the third area 815 of the display panel 810, to which movie-related video content is output, is included in the safety-related area.

Referring to FIGS. 33 and 34, both of real-time OTT service-related content 3410, which is output to the second area 813, and the movie-related content 3210 which is output to the third area 815, correspond to video content, such that the vehicle display device 251 may determine the second area 813 and the third area 815 as the safety-related area.

The vehicle display device 251 may restrict light emission toward the driver's seat from the second area 813 and the third area 815 of the display panel 810 which are determined as the safety-related area. The vehicle display device 251 may apply voltage to the second upper substrate 1233 and the second lower substrate 1234 which are disposed in one area of the viewing angle adjustment panel 1100 corresponding to the second area 813 and the third area 815 of the display panel 810. In this case, the arrangement of the liquid crystals in the liquid crystal layer 1212 corresponding to the second area 813 and the third area 815 is changed, thereby restricting the light emission from the second area 813 and the third area 815 toward the driver's seat.

Accordingly, the driver 10 may view only the instrument panel screen 3110, and may not view the real-time OTT service-related content 3410 and the movie-related content 3210. Meanwhile, the passenger 20 may view all of the instrument panel screen 3110, the real-time OTT service-related content 3410, and the movie-related content 3210.

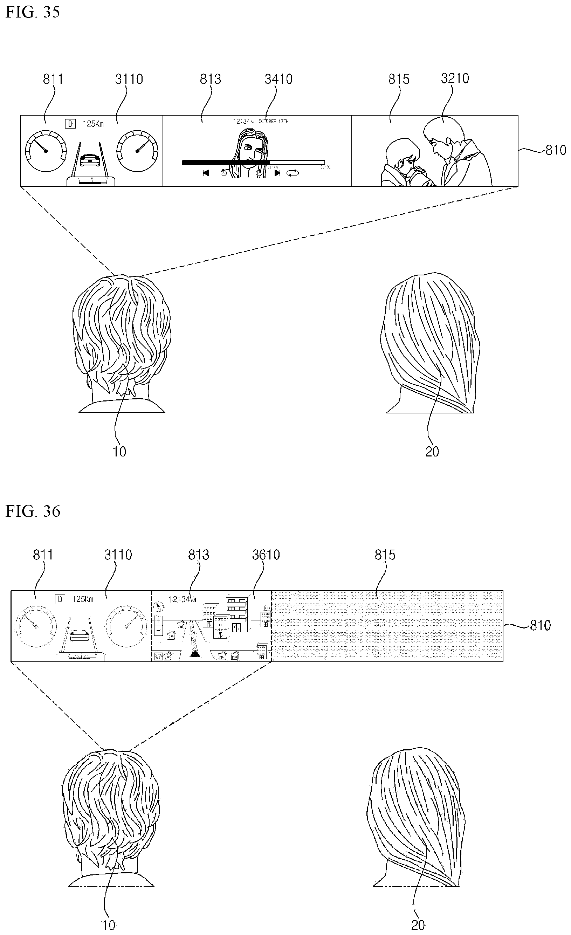

Meanwhile, referring to FIG. 35, in the case where the speed of the vehicle 100 is lower than a preset speed limit (e.g., 10 km/h), the autonomous driving mode is set, or the state of the transmission is parking P, etc., this may not correspond to the safety-related condition that is related to driving of the vehicle 100. In this case, the vehicle display device 251 may stop applying voltage to the second upper substrate 1233 and the second lower substrate 1234 disposed in one area of the viewing angle adjustment panel 1100. Accordingly, as in the case of the passenger 20, the driver 10 may also view all of the instrument panel screen 3110, the real-time OTT service-related content 3410, and the movie-related content 3210.

Meanwhile, in the case where the real-time OTT service-related content 3410 is transmitted from the mobile device of the passenger 20 or is preset as exclusive content for the passenger 20, the vehicle display device 251 may determine the second area 8113 of the display panel 810 as the passenger seat-related area. If the second area 813 is a passenger-seat related area although not corresponding to the safety-related condition, the vehicle display device 251 may continuously apply voltage to the second upper substrate 1233 and the second lower substrate 1234 which are disposed in one area of the viewing angle adjustment panel 1100. Accordingly, if the second area 813 is the passenger seat-related area, the driver 10 may view only the instrument panel screen 3110 and the movie-related content 3210.

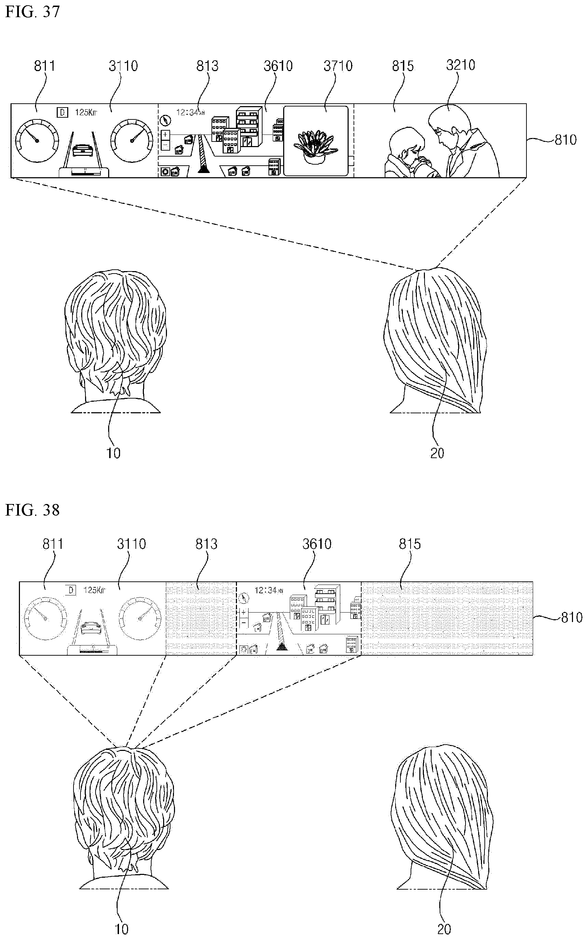

Referring to FIGS. 36 and 37, a navigation screen 3610 and photo-related content 3710 may be output to the second area 813 of the display panel 810. Each of the instrument panel screen 3110 output to the first area 811 and the navigation screen 3610 output to the second area 813 is driving-related content, such that the vehicle display device 251 may determine, as the safety-related area, a remaining area excluding one area, in which the navigation screen 3610 is output, of the first area 811 and the second area 813.

If the speed of the vehicle 100 is higher than or equal to a preset speed limit (e.g., 10 km/h), the display device 251 may determine, as the safety-related area, the third area 815 to which the movie-related content 5410 is output. Meanwhile, if the speed of the vehicle 100 is a predetermined speed (e.g., 60 km/h), the display device 251 may determine, as the safety-related area, one area to which the photo-related content 3710 is output, of the third area 815 and the second area 813.

Accordingly, if the speed of the vehicle 100 is equal to or higher than the preset speed limit (e.g., 10 km/h) and lower than a predetermined speed (e.g., 60 km/h), the driver 10 may view the instrument panel screen 3110, the navigation screen 3610, and the photo-related content 3710. In addition, if the speed of the vehicle 100 is equal to or higher than the predetermined speed (e.g., 60 km/h), the driver 10 may view only the instrument panel screen 3110 and the navigation screen 3610.

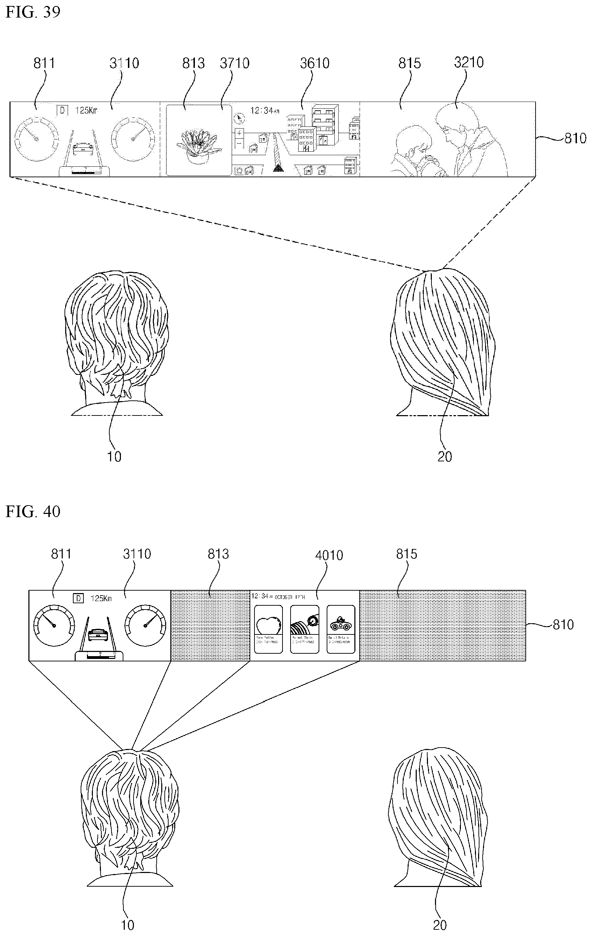

Referring to FIGS. 38 and 39, the navigation screen 3610 and the photo-related content 3710 may be output to the second area 813 of the display panel 810. Each of the instrument panel screen 3110 output to the first area 811 and the navigation screen 3610 output to the second area 813 is driving-related content, such that the vehicle display device 251 may determine, as the safety-related area, a remaining area excluding one area, in which the navigation screen 3610 is output, of the first area 811 and the second area 813.

Meanwhile, in the case where the movie-related video content 3410 and the photo-related content 3710 are transmitted from the mobile device of the passenger 20 to the vehicle 100, the vehicle display device 251 may determine, as the passenger seat-related area, an area in which the photo-related content 3710 is output, of the third area 815 and the second area 813.

The vehicle display device 251 may restrict light emission toward the driver's seat from the third area 815 of the display panel 810 that is determined as the safety-related area and the passenger seat-related area. In addition, the vehicle display device 251 may restrict light emission toward the driver's seat from an area, in which the photo-related content 3710 is output, in the second area 813 determined as the passenger seat-related area.

Accordingly, while the safety-related condition that is related to driving of the vehicle 100 is satisfied, the driver 10 may view only the instrument panel screen 3110 and the navigation screen 3610 and may not view the movie-related video content 3210 and the photo-related content 3710. In addition, even when the safety-related condition that is related to driving of the vehicle 100 is not satisfied, the driver 10 may not view the movie-related video content 3210 and the photo-related content 3710. Meanwhile, the passenger 20 may view all of the instrument panel screen 3110, the photo-related content 3710, the navigation screen 3610, and the movie-related content 3210.

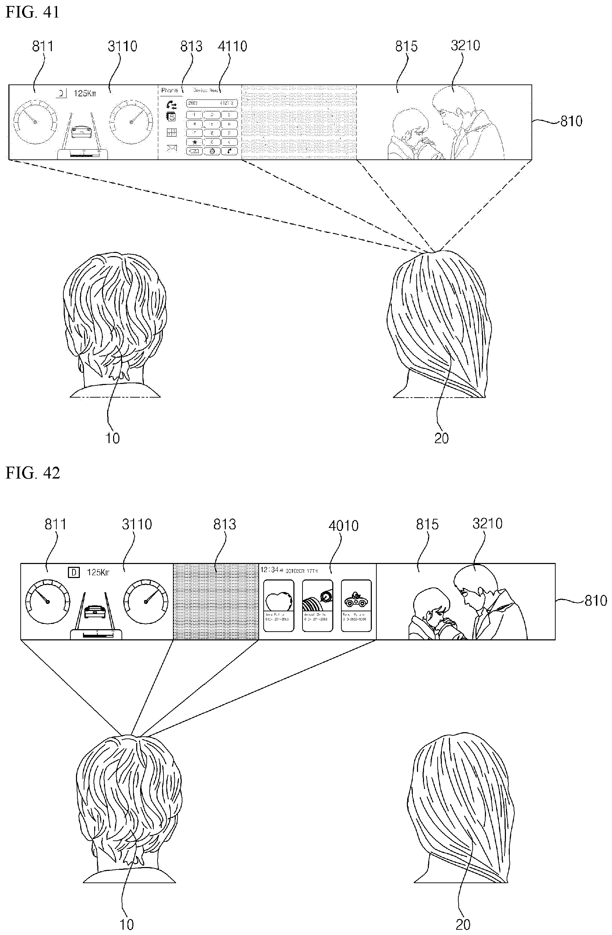

Referring to FIGS. 40 and 41, contact-related content 4010 and keypad-related content 4110 may be output to the second area 813 of the display panel 810. In this case, the contact-related content 4010 may be transmitted from the mobile device of the driver 10 to the vehicle 100. In addition, the keypad-related content 4110 may be preset as exclusive content for the passenger 20.

Meanwhile, in the case where the contact-related content 4010 is transmitted from the mobile device of the driver 10 to the vehicle 100, the vehicle display device 251 may determine an area, in which the contact-related content 4010 is output, as the privacy-related area in the second area 813. In this case, the area, in which the contact-related content 6210 is output, in the second area 813 may correspond to a restricted area related to privacy of the driver's seat (hereinafter referred to as a driver-related area) in the privacy-related area. In addition, an area, in which the keypad-related content 4110 preset as exclusive content for the passenger 20 in the second area 813 is output, may correspond to the passenger seat-related area in the privacy-related area.

The vehicle display device 251 may restrict light emission toward the driver's seat from the third area 815 of the display panel 810 that is determined as the safety-related area. In addition, the vehicle display device 251 may restrict light emission toward the driver's seat from an area, in which the keypad-related content 4110 is output, in the second area 813 determined as a third restricted area.

Meanwhile, the vehicle display device 251 may restrict light emission toward the passenger seat from an area, in which the contact-related content 4010 is output, in the second area 813 determined as the driver-related area. The vehicle display device 251 may apply voltage to the third upper substrate 1235 and the third lower substrate 1236 which are disposed in one area of the viewing angle adjustment panel 1100 that corresponds to the area in which the contact-related content 4010 is output. In this case, the arrangement of the liquid crystals in the third liquid crystal layer 1213 corresponding to the area, in which the contact-related content 4010 is output, is changed such that light emission from the area, in which the contact-related content 4010 is output, toward the passenger seat may be restricted.

Accordingly, while the safety-related condition that is related to driving of the vehicle 100 is satisfied, the driver 10 may view only the instrument panel screen 4310 and the contact-related content 4010 and may not view the movie-related video content 3210 and the keypad-related content 4110. In addition, the passenger 20 may view only the instrument panel screen 4310, the keypad-related content 4110, and the movie-related content 3210 and may not view the contact-related content 4010.

Meanwhile, referring to FIG. 42, in the case where the speed of the vehicle 100 is lower than a preset speed limit (e.g., 10 km/h), the autonomous driving mode is set, or the state of the transmission is parking P, etc., this may not correspond to the safety-related condition that is related to driving of the vehicle 100. In this case, the vehicle display device 251 may stop applying voltage to the second upper substrate 1233 and the second lower substrate 1234 which are disposed in one area of the viewing angle adjustment panel 1100. Accordingly, as in the case of the passenger 20, the driver 10 may also view the movie-related content 3210.

Meanwhile, even when the safety-related condition that is related to driving of the vehicle 100 is not satisfied, the driver 10 may not view the keypad-related content 4110 output to one area in the second area 813.

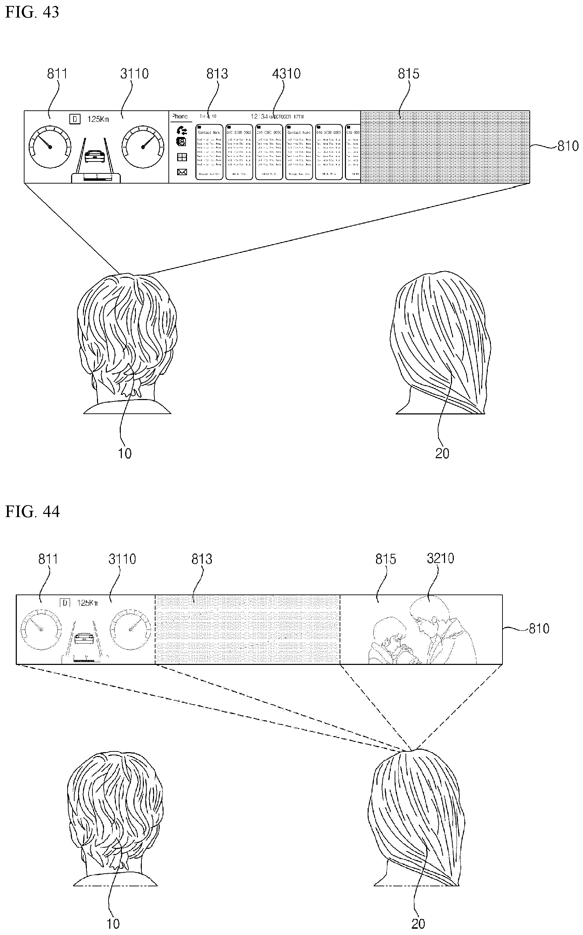

Referring to FIGS. 43 and 44, the movie-related content 3210 may be transmitted from the mobile device of the passenger 20 to the vehicle 100, or may be set as exclusive content for the passenger 20. In this case, the third area 815, in which the movie-related content 3210 is output, may be determined as the passenger seat-related area in the privacy-related area. In addition, text message-related content 4310 may be transmitted from the mobile device of the driver 10 to the vehicle 100, or may be set as exclusive content for the driver 10. In this case, the second area 813, in which the text message-related content 4310 is output, may be determined as the driver's seat-related area in the privacy-related area.

The vehicle display device 251 may restrict light emission toward the driver's seat from the third area 815 determined as the passenger seat-related area. In addition, the vehicle display device 251 may restrict light emission toward the passenger seat from the second area 813 determined as the driver's seat-related area. Accordingly, the driver 10 may view only the instrument panel screen 4310 and the text message-related content 4310 and may not view the movie-related video content 3210. **In** addition, the passenger 20 may view only the instrument panel screen 4310 and the movie-related content 3210 and may not view the text message-related content 4310.

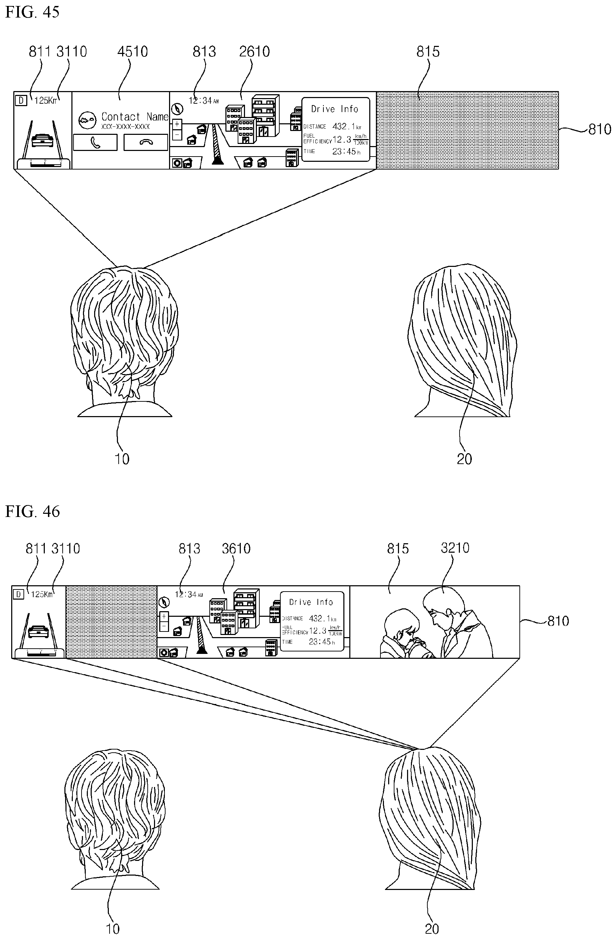

Referring to FIGS. 45 and 46, as the movie-related content 3210 corresponding to the video content is output to the third area 815, the vehicle display device 251 may determine the third area 815 as a first restricted area. **In** addition, call function-related content 4510 may be preset as exclusive content for the driver 10. **In** this case, a portion of the first area 811, in which the call function-related content 4510 is output, may be determined as the driver's seat-related area in the privacy-related area.

The vehicle display device 251 may restrict light emission toward the driver's seat from the third area 815 determined as the safety-related area. In addition, the vehicle display device 251 may restrict light emission toward the passenger seat from a portion of the first area 811, which is determined as the driver's seat-related area and in which the call function-related content 4510 is output.

Accordingly, while the safety-related condition that is related to driving of the vehicle 100 is satisfied, the driver 10 may view only the instrument panel screen 3310, the call function-related content 4510, and the navigation screen 3610 and may not view the movie-related video content 3210. Meanwhile, the passenger 20 may view only the instrument panel screen 3110, the navigation screen 3610, and the movie-related content 3210 and may not view the call function-related content 4510.

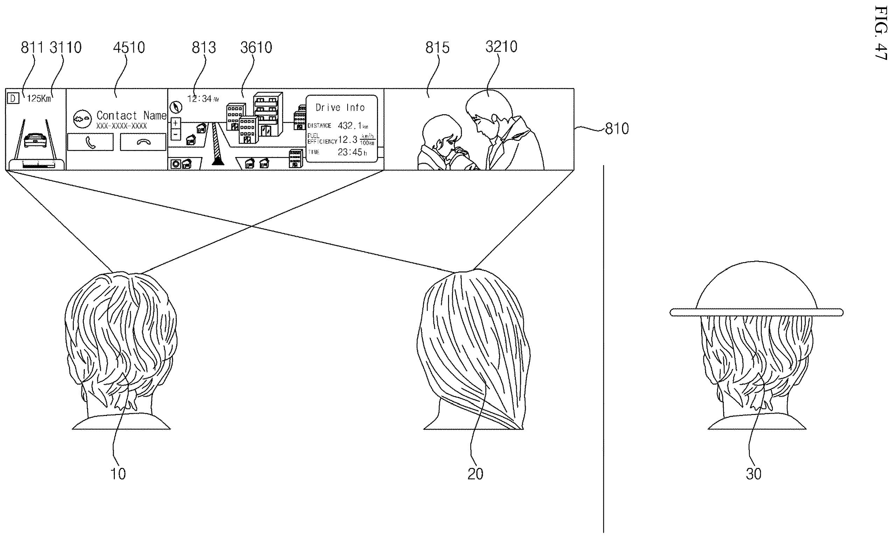

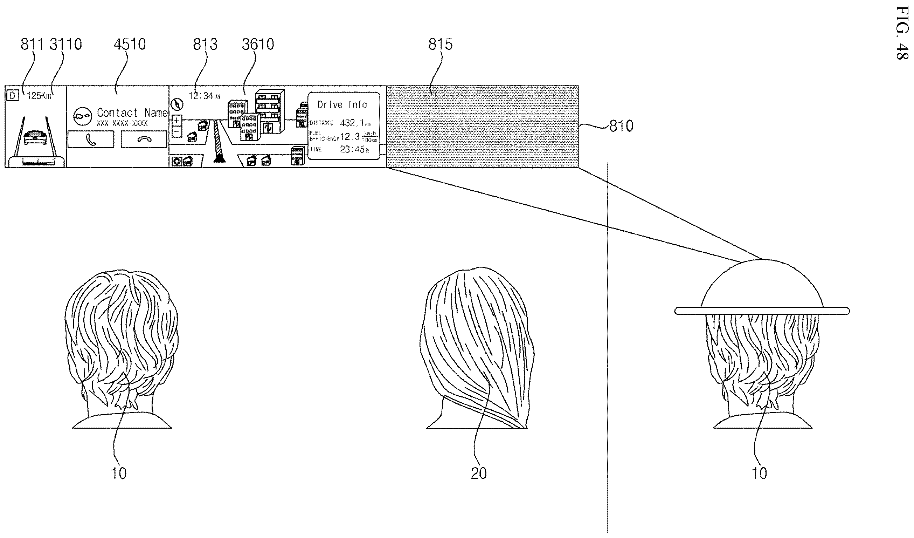

Referring to FIGS. 47 and 48, by using the viewing angle adjustment panel 1100, the vehicle display device 251 according to an embodiment of the present disclosure may prevent an image, output to the display panel 810, from being exposed to the outside of the vehicle 100.

The controller 170 and/or the processor 370 may determine whether the other vehicle OB11, the pedestrian OB12, the two-wheeled vehicle OB13, and the like approach the right side of the vehicle 100 where the passenger seat is located, by using the object detection device 300. In this case, upon determining that the other vehicle OB11, the pedestrian OB12, the two-wheeled vehicle OB13, and the like approach the right side of the vehicle 100, the vehicle display device 251 may adjust the viewing angle by using the viewing angle adjustment panel 1100 corresponding to the third area 815. The vehicle display device 251 may apply voltage to the third upper substrate 1235 and the third lower substrate 1236 which are disposed in one area of the viewing angle adjustment panel 1100 that corresponds to the third area 815. In this case, the arrangement of the liquid crystals in the third liquid crystal layer 1213 corresponding to the third area 815 is changed, thereby restricting light emission toward the right exterior of the vehicle 100.

Accordingly, a pedestrian 30 located outside the vehicle 100 may not view the movie-related content 3210 output to the third area 815. Meanwhile, the driver 10 and the passenger 20 sitting inside the vehicle 100 may view all of the instrument panel screen 3110, the call function-related content 4510, the navigation screen 3610, and the movie-related content 3210.

In the present disclosure, a screen output to the third area 815 is illustrated as an example, but the present disclosure is not limited thereto. For example, the controller 170 and/or the processor 370 may determine whether the other vehicle OB11, the pedestrian OB12, the two-wheeled vehicle OB13, and the like approach the left side of the vehicle 100 where the driver's seat is located, by using the object detection device 300. In this case, upon determining that the other vehicle OB11, the pedestrian OB12, the two-wheeled vehicle OB13, and the like approach the left side of the vehicle 100, the vehicle display device 251 may adjust the viewing angle by using the viewing angle adjustment panel 1100 corresponding to the first area 811. The vehicle display device 251 may apply voltage to the second upper substrate 1233 and the second lower substrate 1234 which are disposed in one area of the viewing angle adjustment panel 1100 that corresponds to the first area 811. In this case, the arrangement of the liquid crystals in the second liquid crystal layer 1212 corresponding to the first area 811 is changed, thereby restricting light emission toward the left exterior of the vehicle 100.

As described above, according to at least one embodiment of the present disclosure, the viewing angle of the display panel 810 may be adjusted.

In addition, according to at least one embodiment of the present disclosure, a display area where the viewing angle is adjusted may be adjusted in various manners.

In addition, according to at least one embodiment of the present disclosure, when the viewing angle of the display panel is adjusted, it is possible to compensate for the luminance of an image output to the area where the viewing angle is adjusted.

In addition, according to at least one embodiment of the present disclosure, it is possible to prevent privacy of a specific person in the vehicle 100 from being exposed to others in the vehicle 100.

In addition, according to at least one embodiment of the present disclosure, it is possible to prevent content, output to the display panel 810, from being exposed to the outside of the vehicle 100.

The accompanying drawings are merely used to help easily understand embodiments of the present disclosure, and it should be understood that the technical features presented herein are not limited by the accompanying drawings. As such, the present disclosure should be construed to extend to any alterations, equivalents and substitutes in addition to those which are particularly set out in the accompanying drawings.

The method of operating the vehicle display device of the present disclosure may be implemented as code that can be written to a processor-readable recording medium and can thus be read by a processor included in the image display device. The processor-readable recording medium may be any type of recording device in which data can be stored in a processor-readable manner. Examples of the processor-readable recording medium include a ROM, a RAM, a CD-ROM, a magnetic tape, a floppy disk, an optical data storage, and a carrier wave, e.g., data transmission over the Internet. Furthermore, the processor-readable recording medium can be distributed over a plurality of computer systems connected to a network so that processor-readable code is written thereto and executed therefrom in a decentralized manner.

It will be apparent that, although the preferred embodiments have been illustrated and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A vehicle display device comprising:
a display panel;
a viewing angle adjustment panel including a plurality of liquid crystal layers containing liquid crystals; and
a controller,
wherein the viewing angle adjustment panel comprises:
a first liquid crystal layer containing first liquid crystals, with arrangement of the first liquid crystals being changed in a first direction in which light emission toward a driver's seat is restricted; and
a second liquid crystal layer containing second liquid crystals, with arrangement of the second liquid crystals being changed in a second direction in which light emission toward a passenger seat is restricted,
wherein the controller is configured to control at least one of the first liquid crystal layer and the second liquid crystal layer so that a viewing angle of one area of the display panel is changed.

2. The vehicle display device of claim 1, wherein the viewing angle adjustment panel is composed of a plurality of subunits that are disposed side by side so that the arrangement of the liquid crystals is controlled independently,
wherein the plurality of subunits respectively correspond to a plurality of areas forming the display panel.

3. The vehicle display device of claim 1, wherein the controller is configured to:
change the arrangement of the first liquid crystals arranged in a first adjustment area of the viewing angle adjustment panel that corresponds to a first restricted area of the display panel to which first content is output; and
change the arrangement of the second liquid crystals arranged in a second adjustment area of the viewing angle adjustment panel that corresponds to a second restricted area of the display panel to which second content is output,
wherein the first content and the second content correspond to the passenger seat and the driver's seat, respectively.

4. The vehicle display device of claim 3, wherein:
the first content comprises at least one of content transmitted from a first electronic device corresponding to the passenger seat, and content preset to correspond to the passenger seat; and
the second content comprises at least one of content transmitted from a second electronic device corresponding to the driver's seat, and content preset to correspond to the driver's seat.

5. The display device of claim 3, wherein in response to predetermined content, related to driving of a vehicle, being output to the display panel, the controller is configured to determine, as the first restricted area, a remaining area of the display panel excluding a predetermined area where the predetermined content is output.

6. The vehicle display device of claim 1, wherein the controller is configured to stop controlling the first liquid crystal layer based on a gaze of a user, sitting in the driver's seat, being directed forward.

7. The vehicle display device of claim 1, wherein the controller is configured to stop controlling the first liquid crystal layer based on a user not sitting in the driver's seat, and to stop controlling the second liquid crystal layer based on a user not sitting in the passenger seat.

8. The vehicle display device of claim 1, wherein the controller is configured to change the arrangement of the first liquid crystals arranged in a first area of the viewing angle adjustment panel that corresponds to the driver's seat based on a predetermined object located outside a vehicle and approaching the driver's seat, and to change the arrangement of the second liquid crystals arranged in a second area of the viewing angle adjustment panel that corresponds to the passenger seat based on the predetermined object approaching the passenger seat.

9. The vehicle display device of claim 1, wherein the viewing angle adjustment panel comprises:
a plurality of first substrates disposed on each of both sides of the first liquid crystal layer; and
a plurality of second substrates disposed on each of both sides of the second liquid crystal layer,
wherein the controller is configured to adjust a degree, by which the arrangement of the first liquid crystals is changed in the first direction, based on a first voltage difference between the plurality of first substrates and to adjust a degree, by which the arrangement of the second liquid crystals is changed in the second direction, based on a second voltage difference between the plurality of second substrates.

10. The vehicle display device of claim 9, wherein in response to the viewing angle adjustment panel including a first area and a second area disposed closer to the driver's seat than the first area, the first voltage difference in the first area is smaller than the first voltage difference in the second area, and the second voltage difference in the first area is greater than the second voltage difference in the second area.
